# EUROPEAN PATENT APPLICATION

(11) **EP 4 422 264 A1**
(43) Date of publication of application: **28.08.2024**
(21) Application number: 21960934.4
(22) Date of filing: 20.10.2021
(51) Int. Cl.: H04W 28/02, H04W 76/20

(54) **ROUTING METHOD AND APPARATUS, AND SYSTEM**

(71) Applicant: Fujitsu Limited, Kawasaki-shi, Kanagawa 211-8588 (JP)
(72) Inventor: LU, Yang, Beijing, 100022 (CN); YI, Su, Beijing, 100022 (CN)
(74) Representative: Haseltine Lake Kempner LLP
(86) International application number: PCT/CN2021/125098
(87) International publication number: WO 2023/065180

(57) **Abstract**

Embodiments of this disclosure provide a routing method and apparatus and a system. The routing method includes: an IAB-node receives flow control indication information for a BH RLC channel and/or for a routing from a child node, the flow control indication information including an available buffer size for the BH RLC channel and an identifier of the BH RLC channel, or including an available buffer size for the routing and an identifier of the routing; and the IAB-node performs routing on downlink data according to the available buffer size.

## Description

### Field

This disclosure relates to the field of communications.

### Background

Seamless cellular network deployment in the future needs very flexible and ultra-dense NR cell deployment. The ultra-dense network is one of goals of 5G, and deployment of an NR network with no wired backhaul is very important for the realization of 5G ultra-dense network. As coverage of a cell is reduced due to a 5G millimeter wave, it is further needed that a wireless self-backhauling system is of multi-hop to meet deployment requirements. High bandwidth, large-scale MIMO and beam system of 5G make it easier for 5G to develop the wireless self-backhauling system of ultra-dense NR cells than LTE. In order to develop this multi-hop system with wireless self-backhauling, 3GPP began research and standardization of an IAB (integrated access and backhaul) project in R16.

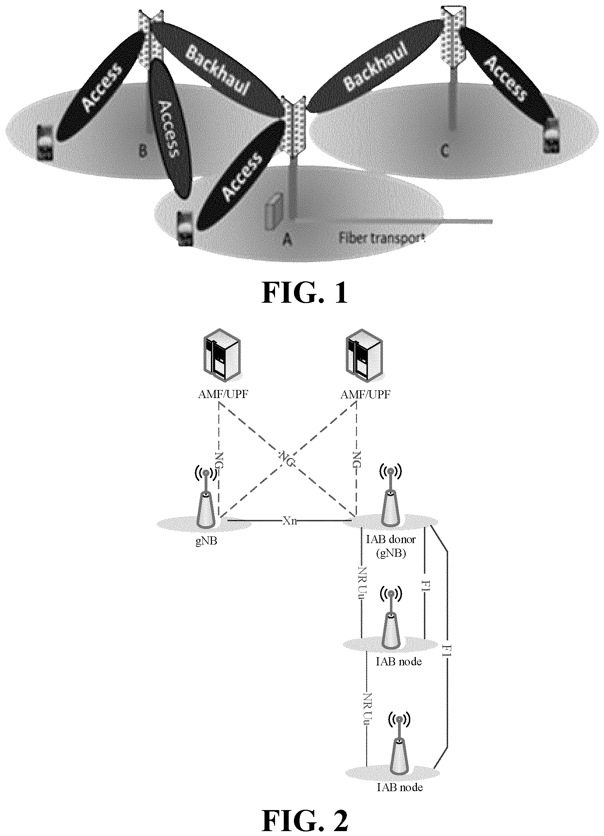

FIG. 1 is a schematic diagram of an IAB system. As shown in FIG. 1, in the IAB system, access and backhaul adopt Uu air interface wireless transmission of NR, a relay node supports access and backhaul functions both. A wireless transmission link of the relay node multiplexes an access link and backhaul link in the time domain, frequency domain or spatial domain. The access link and backhaul link may use identical or different frequency bands.

In an IAB network architecture, the relay node refers to an IAB-node, which supports access and backhaul functions both. A last hop of access node at the network side is referred to as an IAB-donor, which supports a gNB function and supports IAB-node access. All UE data may be backhauled to the IAB-donor in one or more hops via the IAB-node.

Functions of the IAB-node are divided into two parts, one is a gNB-DU function, referred to as an IAB-DU, and the other is a UE function, referred to as an IAB-MT. The IAB-DU realizes function of a network side device, is connected to a downlink child IAB-node, provides NR air interface access to the UE and the downstream child IAB-node, and establishes F1 connection with the IAB donor-CU. The IAB-MT realizes functions of part of a terminal equipment and is connected to an upstream parent IAB-node or IAB-donor DU. The IAB-MT includes physical layer, layer 2, RRC (Radio Resource Control) and NAS (Non-Access Stratum) layer functions, and is further indirectly connected to the IAB donor-CU and a core network (CN).

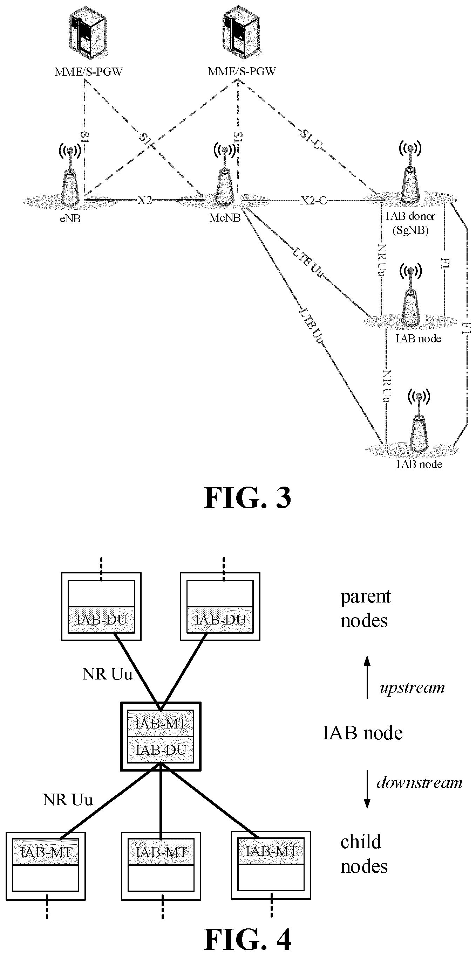

In the IAB system, the IAB-node may access to the network in a standalone (SA) mode or E-UTRA-NRDualConnectivity (EN-DC) mode. FIG. 2 is a schematic diagram of an IAB architecture of the SA mode. FIG. 3 is a schematic diagram of an IAB architecture of the EN-DC mode.

FIG. 4 is a schematic diagram of an IAB-node, its parent IAB-node and its child IAB-node. As shown in FIG. 4, an IAB-DU of the IAB-node is taken as a network side to connect to IAB-MT of the child IAB-node, and an IAB-MT of the IAB-node is taken as a terminal side to connect to IAB-DU of the parent IAB-node.

FIG. 5 is a schematic diagram of an F1 user interface (F1-U) protocol stack between the IAB-DU and IAB-donor-CU. FIG. 6 is a schematic diagram of an F1 control plane (F1-C) protocol stack between the IAB-DU and IAB-donor-CU.

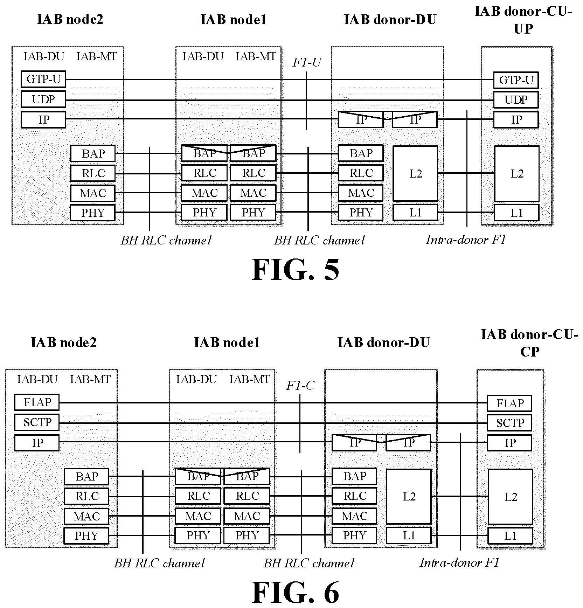

As shown in FIG. 5 and FIG. 6, the F1-U and F1-C are built above a transmission (IP) layer between the IAB-DU and IAB-donor-CU. Two hops of wireless backhaul and one hop of wired backhaul are performed in FIG. 5 and FIG. 6. On the backhaul link, the transmission (IP) layer is carried on a backhaul adaptive protocol (BAP) sublayer. A BAP entity in the IAB-node achieves a routing function of the IAB system, and the IAB-donor-CU provides a routing table. BAP PDUs (Protocol Data Unit) are transmitted in an RLC (Radio Link Control) channel of the backhaul link, multiple RLC channels of the backhaul link may be configured by the IAB-donor to carry services of different priorities and QoS (Quality of Service), and the BAP entity maps the BAP PDUs to different backhaul RLC channels.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary of the Disclosure

It was found by the inventors that on the one hand, for uplink data, in a case where an IAB-node establishes dual connectivity, if an RLF occurs in one link, the IAB-node is unable to perform routing strategy update on relevant data according to the RLF link; and on the other hand, for downlink data, when a child node transmits a flow control indication, there is no solution for how the IAB-node reroutes the downlink data according to the flow control indication.

In order to solve at least one of the above problems or other similar problems, embodiments of this disclosure provide a routing method and apparatus and a system.

According to an aspect of the embodiments of this disclosure, there is provided a routing apparatus, configured in an IAB-node in an IAB system, the apparatus including:
a receiving unit configured to receive flow control indication information for a BH RLC channel and/or for a routing from a child node, the flow control indication information including an available buffer size for the BH RLC channel and an identifier of the BH RLC channel, or including an available buffer size for the routing and an identifier of the routing; and
a transmitting unit configured to perform routing on downlink data according to the available buffer size.

According to another aspect of the embodiments of this disclosure, there is provided a routing apparatus, configured in a child node of an IAB-node in an IAB system, the apparatus including:
a transmitting unit configured to, when a BH RLC channel buffer of the child node exceeds a third buffer threshold, transmit flow control indication information based on BH RLC channel to the IAB-node, wherein the flow control indication information includes an available buffer size for the BH RLC channel and an identifier of the BH RLC channel, so that the IAB-node performs routing on downlink data according to the available buffer size.

According to a further aspect of the embodiments of this disclosure, there is provided a routing apparatus, configured in a child node of an IAB-node in an IAB system, the apparatus including:
a transmitting unit configured to, when a buffer of a fifth routing exceeds a fourth buffer threshold, transmit flow control indication information based on routing to the IAB-node, wherein the flow control indication information includes an available buffer size for the fifth routing and a fifth routing ID, so that the IAB-node performs routing on downlink data according to the available buffer size.

According to still another aspect of the embodiments of this disclosure, there is provided a routing apparatus, configured in an IAB-node in an IAB system, the apparatus including:
a transmitting unit configured to, when it is detected by the IAB-node that an RLF occurs in one or more ingress links, transmit RLF indication information to a child node, the RLF indication information including an identifier of a routing in a routing configuration of a routing table of the IAB-node with an egress link corresponding to a next hop address being the link in which the RLF occurs, so that the child node performs routing on uplink data according to the RLF indication information.

According to yet another aspect of the embodiments of this disclosure, there is provided a routing apparatus, configured in a child node of an IAB-node in an IAB system, the apparatus including:
a receiving unit configured to receive RLF indication information from an IAB-node, the RLF indication information including an identifier of a routing with a link corresponding to a next hop address is the link in which the RLF occurs; and
a transmitting unit configured to perform routing on uplink data according to the RLF indication information.

One of the advantages of the embodiments of this disclosure exists in that an IAB-node (serving as a child node) may learn whether uplink routing is available according to RLF indication information from a parent node, so as to avoid selecting unavailable routing in selecting routing for uplink data, and avoid drop and unreachability of uplink data; and furthermore, the IAB-node (serving as a parent node) may learn whether downlink routing are congested and whether a BH RLC channel is congested according to flow control indication information from a child node, so as to avoid selecting congested routing and BH RLC channel in selecting routing and a BH RLC channel for downlink data, thereby alleviating and solving a problem of congestion and drop of downlink data.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in identical way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is schematic diagram of an IAB system;
FIG. 2 is a schematic diagram of an IAB architecture in an SA mode;
FIG. 3 is a schematic diagram of an IAB architecture in an EN-DC mode;
FIG. 4 is a schematic diagram of a parent IAB-node and a child IAB-node of an IAB-node;
FIG. 5 is a schematic diagram of an F1-U protocol stack of the IAB system;
FIG. 6 is a schematic diagram of an F1-C protocol stack of the IAB system;

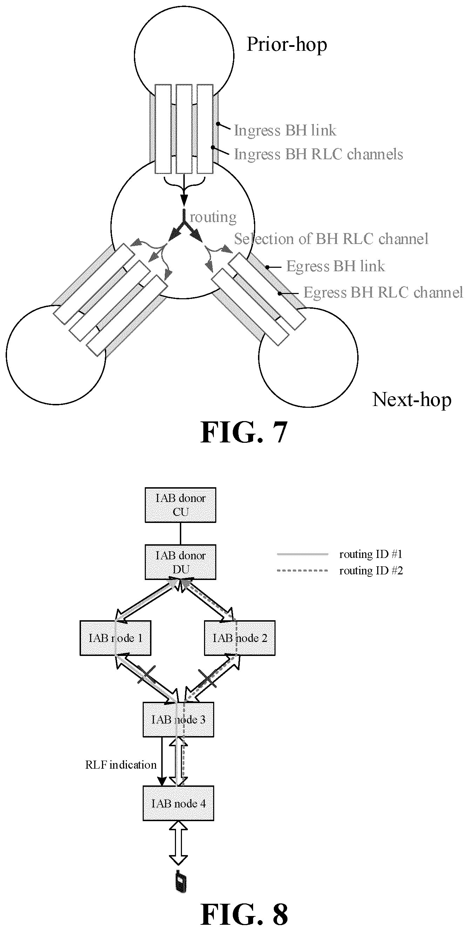

FIG. 7 is a schematic diagram of routing selection;
FIG. 8 is a schematic diagram of performing routing on uplink data by IAB-node 4 according to an RLF indication;

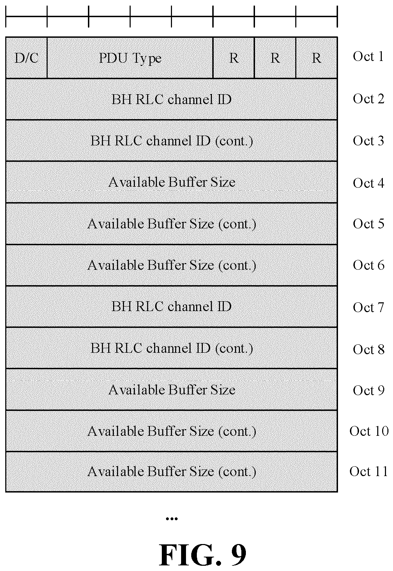

FIG. 9 is a schematic diagram of a flow control BAP control PDU based on BH RLC channel;

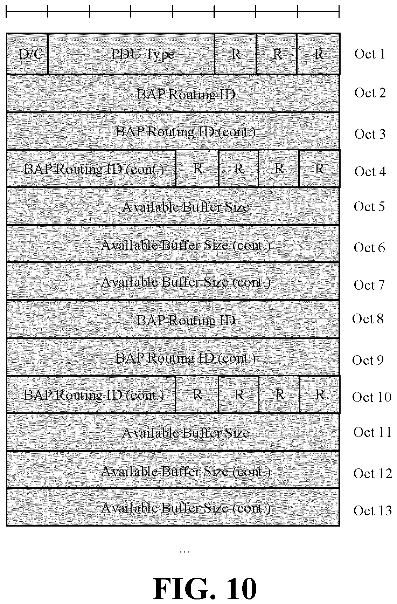

FIG. 10 is a schematic diagram of a flow control BAP control PDU based on routing ID;

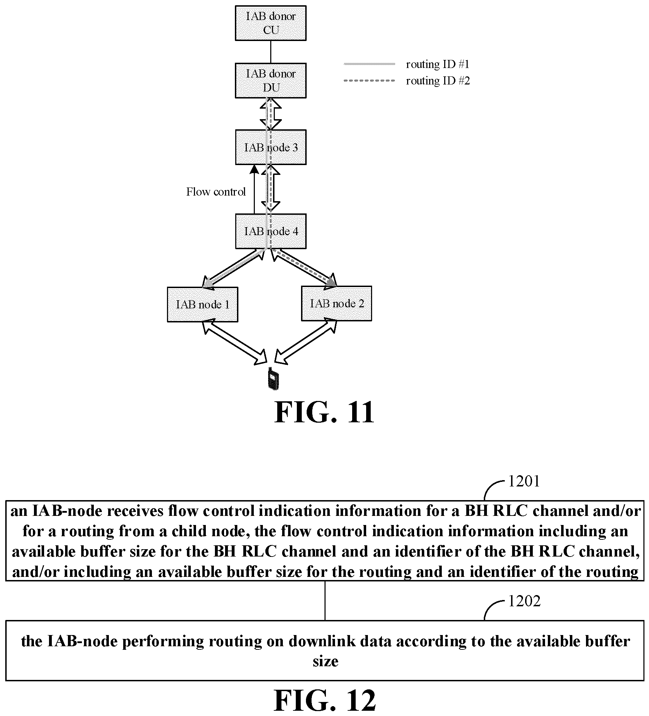

FIG. 11 is a schematic diagram of performing routing on downlink data by IAB-node 3 according to a flow control indication;
FIG. 12 is a schematic diagram of the routing method of an embodiment of a first aspect of this disclosure;

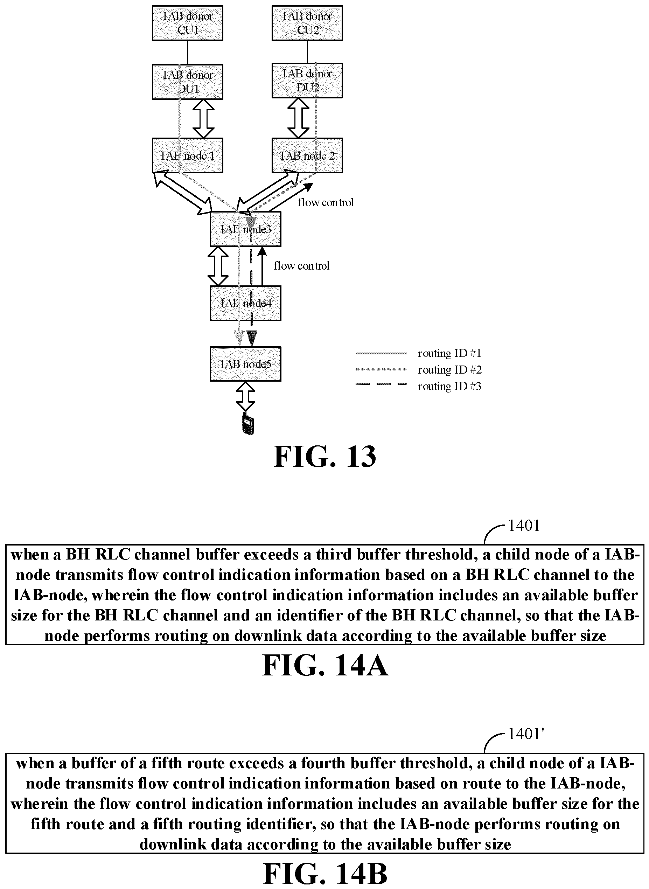

FIG. 13 is a schematic diagram of an example of a routing relationship of an IAB-node;
FIG. 14A is another schematic diagram of the routing method of the embodiment of the first aspect of this disclosure;
FIG. 14B is a further schematic diagram of the routing method of the embodiment of the first aspect of this disclosure;

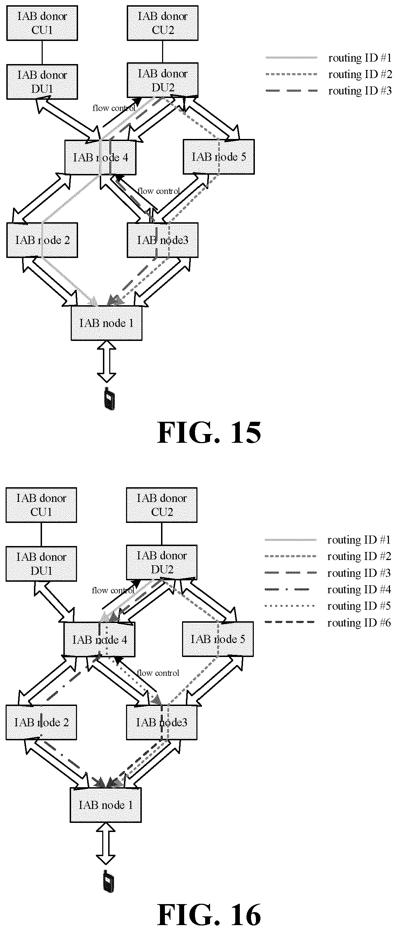

FIG. 15 is a schematic diagram of a routing process according to the routing method of the embodiment of the first aspect of this disclosure;
FIG. 16 is another schematic diagram of the routing process according to the routing method of the embodiment of the first aspect of this disclosure;

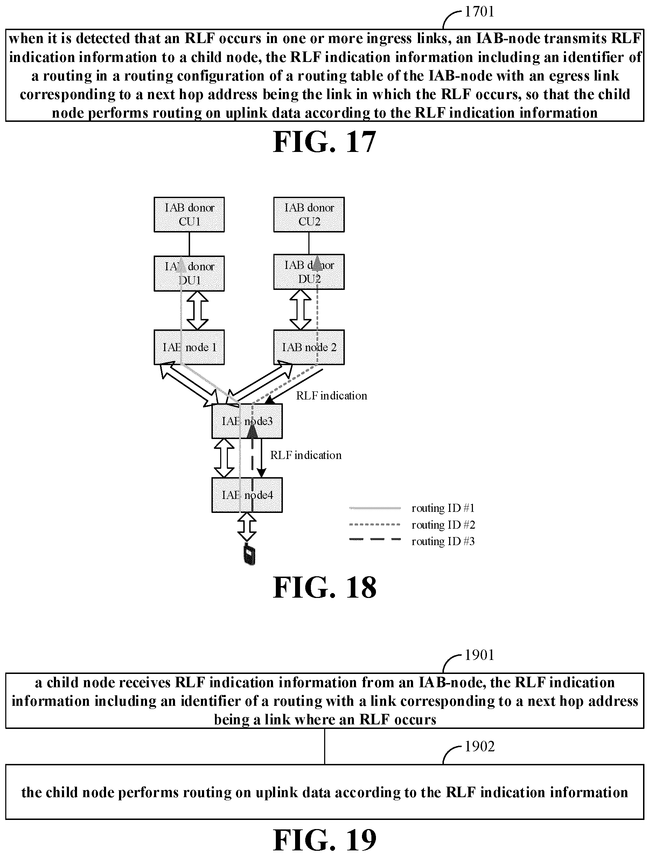

FIG. 17 is a schematic diagram of the routing method of an embodiment of a second aspect of this disclosure;
FIG. 18 is a schematic diagram of another example of the routing relationship of the IAB-node;
FIG. 19 is another schematic diagram of the routing method of the embodiment of the second aspect of this disclosure;

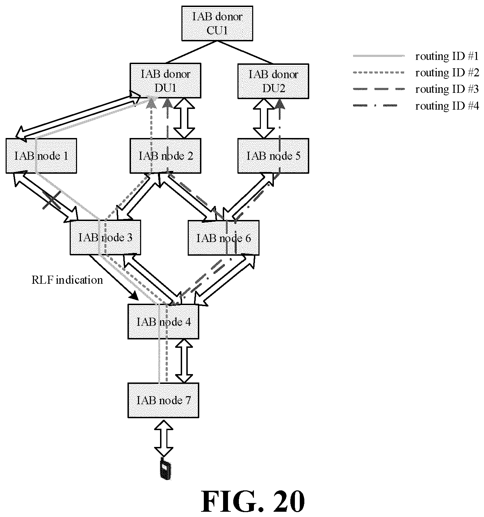

FIG. 20 is a schematic diagram of a further example of the routing relationship of the IAB-node;

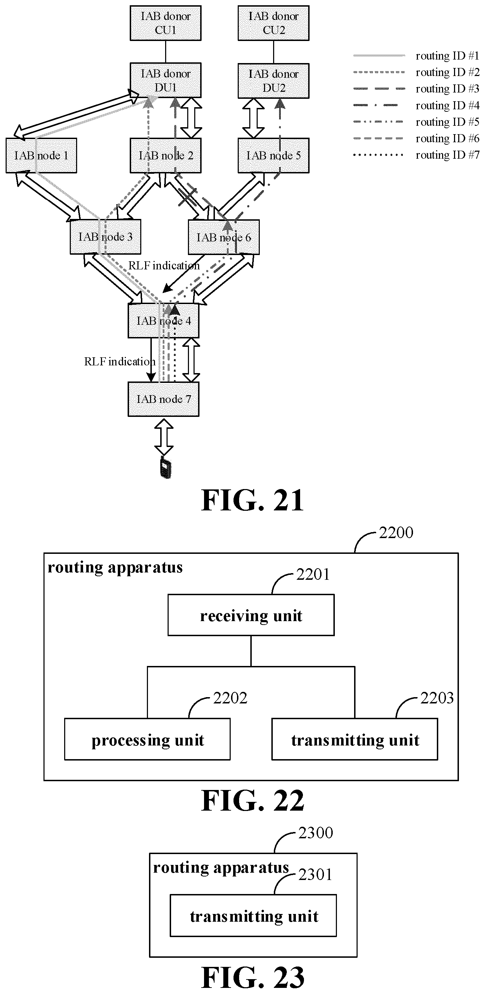

FIG. 21 is a schematic diagram of still another example of the routing relationship of the IAB-node;
FIG. 22 is a schematic diagram of the routing apparatus of an embodiment of a third aspect of this disclosure;
FIG. 23 is another schematic diagram of the routing apparatus of the embodiment of the third aspect of this disclosure;

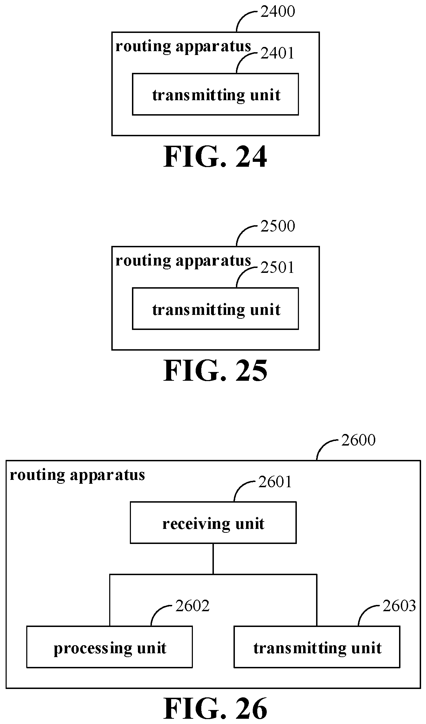

FIG. 24 is a further schematic diagram of the routing apparatus of the embodiment of the third aspect of this disclosure;
FIG. 25 is a schematic diagram of the routing apparatus of an embodiment of a fourth aspect of this disclosure;
FIG. 26 is another schematic diagram of the routing apparatus of the embodiment of the fourth aspect of this disclosure;

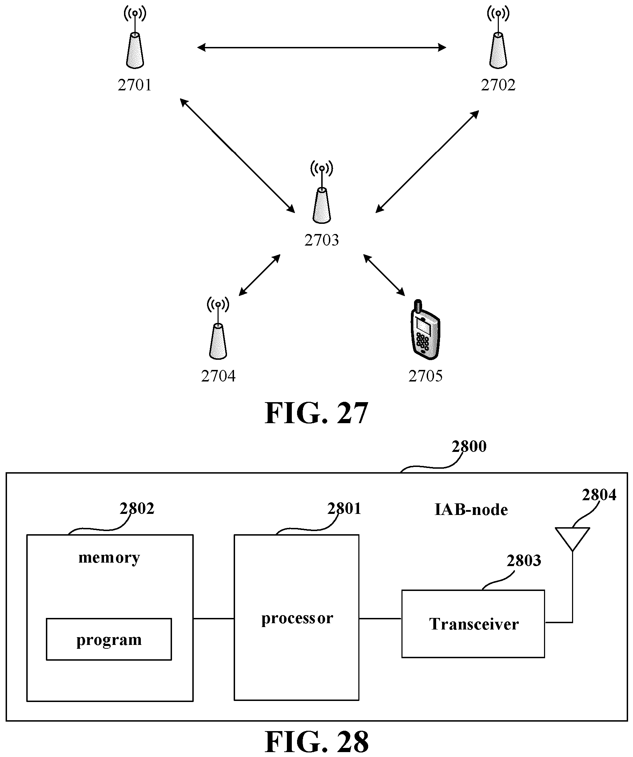

FIG. 27 is a schematic diagram of a communication system of an embodiment of this disclosure; and
FIG. 28 is a schematic diagram of an IAB-node of an embodiment of this disclosure.

### Detailed Description of the Disclosure

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: new radio (NR), long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and 6G in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following equipment: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" refers to, for example, an equipment accessing to a communication network and receiving network services via a network device, and may also be referred to as "a terminal equipment (TE)". The terminal equipment may be fixed or mobile, and may also be referred to as a mobile station (MS), a terminal, a user, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In an IAB system, a routing function is implemented by a BAP layer, and each IAB-node saves a routing table (BH routing configuration) and an RLC channel mapping table (BH RLC channel mapping configuration). A BAP entity performs routing according to the routing table, the RLC channel mapping table and a routing ID in a BAP layer packet header, the routing ID including a destination BAP address and a path ID.

The routing table contains a mapping relationship between the routing ID and an address of a next hop of node. The RLC channel mapping table contains a mapping relationship between an address of a last hop, an ingress RLC channel ID and an address of a next hop and an egress RLC channel ID. For each packet, the address of the next hop may be looked up from the routing table via the routing ID in the packet header. The address of the last hop and the ingress RLC channel ID are known. Hence, after the address of the next hop is determined, the egress RLC channel ID may be found from the RLC channel mapping table according to the address of the last hop, the ingress RLC channel ID and the address of the next hop. FIG. 7 is a schematic diagram of routing selection.

In addition, an IAB-donor DU saves the routing table (BH routing configuration) and the downlink traffic to BH RLC channel mapping configuration. The IAB-donor DU performs routing according to the routing table, the downlink RLC channel mapping table and the routing ID in the BAP layer packet header. The routing table contains a mapping relationship between the routing ID and the address of the next hop of node. The downlink RLC channel mapping table contains a mapping relationship between a target IP address, DSCP and the address of the next hop and the egress RLC channel ID. For each downlink packet arriving at the IAB-donor DU, the address of the next hop may be found from the routing table according to routing ID in the packet header. Hence, after determining the address of the next hop, the egress RLC channel ID may be found from the downlink RLC channel mapping table according to the IP address and DSCP of the data packet.

It was found by the inventors that for routing of uplink data, if an IAB-node detects an RLF in a link between the IAB-node and its parent node, or when link recovery fails after an RLF of a link between the IAB-node and its parent node, it will transmit a BH RLF indication to its child node. When the child node receives the BH RLF indication, it deems that a link between it and the IAB-node is unavailable. When the child node performs routing on uplink data, according to configuration of the routing table, if a next hop of node of a path to which the uplink data correspond is the IAB-node, the child node performs re-routing on the uplink data, that is, selecting a path with a next hop of node that is not this IAB-node, so as to prevent the uplink data from being unable to be transmitted.

However, in a case where the IAB-node establishes dual connectivity, a BH RLF indication is transmitted to the child node only when RLF occurs in two dual-connectivity links or RRC reestablishment fails after the RLF occurs, so as to trigger the child node to update an uplink data routing strategy. As shown in FIG. 8, if IAB-node 3 detects that RLF occurs in a link between it and IAB-node 1 and in a link between it and IAB-node 2 or RRC reestablishment fails after the RLF occurs, it transmits an RLF indication to its child node IAB-node 4. Hence, IAB-node 4 will not select a link of IAB-node 3 in selecting routing of uplink data. However, in practice, when the IAB-node is in dual connectivity with its parent node, a probability that RLF occurs in two links is relatively low. If an RLF occurs in only one link, routing related to this link is unavailable. However, currently, the child node is unable to learn information on RLF of this link, and is unable to perform routing strategy update on related data according to the RLF link.

In addition, it was further found by the inventors that for routing of downlink data, if a downlink buffer in the child node of the IAB-node exceeds a certain threshold, or when the child node (IAB-MT) receives downlink flow control polling transmitted by the IAB-node, the child node (IAB-MT) transmits a flow control indication information based on BH RLC channel or based on routing ID to the IAB-node, including an available buffer size for the BH RLC channel or for the routing ID. FIG. 9 is a schematic diagram of a flow control BAP control PDU based on BH RLC channel, and FIG. 10 is a schematic diagram of a flow control BAP control PDU based on routing ID. The IAB-node may perform re-routing on downlink data according to the flow control indication received from its child node, so as to alleviate congestion state of the child node.

However, no specific solution is provided in existing techniques for how an IAB-node performs re-routing on downlink data. As shown in FIG. 11, if a buffer in IAB-node 4 exceeds a certain limit, a flow control BAP control PDU (flow control indication) will be transmitted to IAB-node 3, which includes an available buffer size for each routing ID or for a BH RLC channel between it and IAB-node 4. IAB-node 3 may perform re-routing on the downlink data to alleviate downlink data congestion in IAB-node 4. However, no solution is provided in existing techniques for how IAB-node 3 performs re-routing on the downlink data.

Various implementations of this disclosure shall be described below with reference to the accompanying drawings. These implementations are illustrative only, and are not intended to limit this disclosure.

### Embodiment of a first aspect

The embodiment of this disclosure provides a routing method, in which downlink data are routed.

FIG. 12 is a schematic diagram of the routing method of the embodiment of this disclosure, which shall be described from a side of an IAB-node in an IAB system, in which the IAB-node serves as a parent node. As shown in FIG. 12, the method includes:
1201: an IAB-node receives flow control indication information for a BH RLC channel and/or for a routing from a child node, the flow control indication information including an available buffer size for the BH RLC channel and an identifier of the BH RLC channel, and/or including an available buffer size for the routing and an identifier of the routing; and
1202: the IAB-node performing routing on downlink data according to the available buffer size.

In the embodiment of this disclosure, the flow control indication information reported by the child node includes the available buffer size for the BH RLC channel and/or for the routing, and according to the available buffer size, the IAB-node may learn whether a corresponding downlink routing and/or downlink BH RLC channel is/are congested. Therefore, in selecting routing and BH RLC channels for the downlink data, selecting congested routing and BH RLC channels may be avoided, and the problem of congestion and drop of downlink data may be alleviated and solved.

In some embodiments, the IAB-node may determine whether the above BH RLC channel and/or the routing is/are congested and available according to the available buffer size, and perform routing on the downlink data according to whether the BH RLC channel and/or the routing is/are available.

For example, when the IAB-node (IAB-DU) receives flow control indication information from an ingress link to which a child node corresponds, it may determine whether the routingBH RLC channel is/are in a congested state according to the available buffer size of the routingBH RLC channel in the flow control indication information. For example, if the available buffer size of the above routing is lower than a first buffer threshold, it is determined that the routing is congested and that an egress link to which the above child node corresponds is unavailable for the routing; or, if the available buffer size of the BH RLC channel is lower than a second buffer threshold, it is determined that the BH RLC channel is congested and that the BH RLC channel of the link to which the child node corresponds is unavailable.

The above first and second buffer thresholds may be preset thresholds or preconfigured thresholds, and may be identical or different, and this disclosure is not limited thereto.

In the above embodiment, that performing routing on downlink data according to whether the routing is available includes selecting an egress link for the downlink data according to whether the routing is available. That is, if the IAB-node (IAB-DU) determines that a routing is in a congested state, in selecting a routing for the downlink data, a corresponding routing will not be selected, and re-routing (routing reselection) may be performed on the downlink data.

In the embodiment of this disclosure, in order to transmit downlink data, replacement routing of one or more first donor-CU domains may be configured for routings of some second donor-CU domains. In a case where the IAB-node establishes dual connectivity with a first donor-CU and a second donor-CU, the IAB-node establishes F1 connection with the first donor-CU. A part of the downlink data need to be transmitted to the IAB-node via the second donor-CU domain. Routings belonging to different donor-CU domains may possibly cause confusion in routing IDs at the IAB-node, and the IAB-node needs to modify a routing ID in a downlink packet header from the second donor-CU domain to a routing ID of the first donor-CU domain and then performs routing. For example, in FIG. 13, a routing (routing ID#1) from the first donor-CU domain and a routing from the second donor-CU domain (routing ID#2) may be identical, and IAB-node 3 needs to convert routing ID#2 to a routing of the first donor-CU domain (routing ID#3) and transmits it to IAB-node 4. Therefore, a table of mapping relationship from the routing ID of the second donor-CU domain to the routing ID of the first donor-CU domain needs to be configured for the IAB-node, i.e. an inter-donor-CU downlink routing replacement table.

In the embodiment of this disclosure, upon receiving the downlink data, the IAB-node first determines whether the downlink data come from the first donor-CU domain or the second donor-CU domain. If the downlink data come from the first donor-CU domain, an egress link is directly selected for the routing ID in the packet header, and if the downlink data come from the second donor-CU domain, the routing ID in the packet header is modified to a corresponding replacement routing ID according to the inter-donor-CU downlink routing replacement table, and then an egress link is selected for the replacement routing ID.

In the above embodiment, before performing routing on the downlink data, the IAB-node first determines whether the downlink data are data transmitted to itself, and then performs routing if the downlink data are not transmitted to itself. In a case where the IAB-node establishes dual connectivity with the first donor-CU and the second donor-CU, it may simultaneously have BAP addresses configured separately by two donor-CUs, and the IAB-node may determine that the data are transmitted to itself according to the destination BAP address in the downlink data BAP header, and then submits the data to a higher layer for processing.

In some implementations, if it is determined that the IAB-node is configured with the inter-donor-CU downlink routing replacement table and the downlink data come from an ingress link to which the second donor-CU corresponds, the IAB-node may replace the first routing ID in the downlink data BAP header (belonging to a second donor-CU topology domain) with a corresponding second routing ID (belonging to a first donor-CU topology domain) according to the inter-donor-CU downlink routing replacement table.

Thereafter, the IAB-node determines whether the routing table of the IAB-node has routing configuration satisfying a second condition, and if the routing table of the IAB-node has routing configuration satisfying a second condition, the IAB-node takes an egress link to which a next hop address in the routing configuration corresponds as a first egress link of the downlink data. The second condition refers to that a routing ID in the routing configuration matches the second routing ID, and the egress link to which the next hop address in the routing configuration corresponds is available for a routing in the routing configuration.

In the above implementation, after the first routing ID in the downlink data BAP header is replaced with a corresponding second routing ID, if the destination BAP address of the second routing ID is a BAP address configured by the first donor-CU for the IAB-node, the IAB-node may further submit the downlink data to a higher layer of the IAB-node.

In some other implementations, if it is determined that the IAB-node is configured with an inter-donor-CU downlink routing replacement table and the downlink data are from an ingress link to which a second donor-CU corresponds, and if the destination BAP address of the first routing ID in the downlink data BAP header is a BAP address configured by the second donor-CU for the IAB-node, the IAB-node may submit the downlink data to the higher layer of the IAB-node.

In some other implementations, if it is determined that the IAB-node is not configured with an inter-donor-CU downlink routing replacement table, or if it is determined that the IAB-node is configured with an inter-donor-CU downlink routing replacement table, the downlink data come from the ingress link to which the first donor-CU corresponds and the first routing ID in the packet header of the downlink data belongs to a first donor-CU topology domain, the IAB-node determines whether the routing table of the IAB-node has routing configuration satisfying a first condition.

If the routing table of the IAB-node has routing configuration satisfying a first condition, the IAB-node takes the egress link to which the next hop address in the routing configuration corresponds as the first egress link of the downlink data. The first condition refers to that a routing ID in the routing configuration matches the first routing ID, and the egress link to which the next hop address in the routing configuration corresponds is available for a routing in the routing configuration.

That is, when the IAB-node (IAB-DU) receives a downlink data, the IAB-node may check the routing table to determine whether there exists an available routing for the routing ID in the packet header of the downlink data. If there is a routing configuration with a routing ID matching the routing ID in the packet header (both the destination BAP address and the path IDs are matched) and the egress link to which the next hop address in the routing configuration corresponds is available for this routing ID, the IAB-node selects the egress link to which the next hop address in the routing configuration corresponds as the egress link of the packet of the downlink data.

In the above implementation, if the routing table of the IAB-node has no routing configuration satisfying the first condition, the IAB-node determines whether the routing table of the IAB-node has routing configuration satisfying a third condition, and if the routing table of the IAB-node has routing configuration satisfying a third condition, the egress link to which the next hop address in the routing configuration corresponds is taken as the first egress link of the downlink data. The third condition refers to that a destination BAP address of the routing ID in the routing configuration matches a destination BAP address of the first routing ID, and the egress link to which the next hop address in the routing configuration corresponds is available for the routing in the routing configuration.

That is, if no suitable egress link is found according to the first condition, it indicates that there is no available routing for the routing ID in the packet header of the downlink data, then, the IAB-node may check whether there is another available routing for the destination address in the packet header. If there is a routing configuration with a destination address matching the destination address in the packet header and the egress link to which the next hop address in the routing configuration corresponds is available for the routing ID in the routing configuration, the IAB-node selects the egress link to which the next hop address in the routing configuration corresponds as the egress link of the packet of the downlink data.

In some other implementations, if it is determined that the IAB-node is not configured with the inter-donor-CU downlink routing replacement table or that the IAB-node is configured with the inter-donor-CU downlink routing replacement table and the downlink data come from an ingress link to which the first donor-CU correspond, if the destination BAP address of the first routing ID in the downlink data BAP packet header is the BAP address configured by the first donor-CU for the IAB-node, the IAB-node submits the downlink data to the higher layer of the IAB-node.

In the above embodiment, if no suitable egress link is found for the downlink data in the methods described above, the IAB-node may drop the downlink data or stop transmission of the downlink data.

Selecting an egress link for the downlink data by the IAB-node are illustrated above with reference to various implementations. However, this disclosure is not limited thereto, and appropriate variants may be made on the basis of these implementations. For example, the above implementations may be executed separately, or one or more of them may be executed in a combined manner.

In the embodiment of this disclosure, if a suitable egress link is found for the downlink data in the methods described in the above implementations, the IAB-node may further select an egress BH RLC channel for the downlink data according to whether the BH RLC channel is available.

In some implementations, the IAB-node is a donor node of the IAB system, i.e. an IAB-donor-DU, the IAB-node may select an egress BH RLC channel for the downlink data according to a fourth condition.

For example, if the RLC channel mapping table of the IAB-node has BH RLC channel configuration satisfying the fourth condition, the IAB-node takes an egress BH RLC channel in the BH RLC channel configuration as the egress BH RLC channel of the above downlink data. The fourth condition refers to that the destination IP address and DSCP in the BH RLC channel configuration match the destination IP address and DSCP in the IP packet header of the above downlink data, the egress link to which the next hop address in the BH RLC channel configuration corresponds matches the first egress link of the above downlink data (i.e. the selected egress link), and the egress BH RLC channel in the BH RLC channel configuration is available.

That is, the IAB-node may check the downlink RLC channel mapping table (downlink traffic to BH RLC channel mapping configuration) to determine whether there is an available BH RLC channel on the selected egress link (first egress link). If there is a BH RLC channel configuration with a destination IP address and DSCP matching the destination IP address and DSCP in the IP packet header of the downlink data, the egress link to which the next hop address in the BH RLC channel configuration corresponds matches the selected egress link (first egress link) and the egress link is available for the egress RLC channel in the BH RLC configuration, the IAB-node selects the egress RLC channel in the BH RLC configuration as the egress BH RLC channel of the packet of downlink data.

In the above implementation, if the RLC channel mapping table of the IAB-node has no BH RLC channel configuration satisfying the fourth condition, in an example, the IAB-node may select an available egress BH RLC channel on the first egress link (i.e. the selected egress link) as the egress BH RLC channel of the downlink data. If there is no available BH RLC channel on the first egress link, the IAB-node selects an available second egress link for the above downlink data. That is, if no suitable egress BH RLC channel is found according to the fourth condition, it indicates that there is no available BH RLC channel for the downlink data and the egress link, and the IAB-node may select any other available egress BH RLC channel of the egress link. If the egress link has no other available egress BH RLC channels, the IAB-node reselects an egress link for the downlink data.

In the above implementation, if the RLC channel mapping table of the IAB-node has no BH RLC channel configuration satisfying the fourth condition, in another example, the IAB-node may select an available second egress link for the downlink data. If there is no available second egress link, the IAB-node selects an available egress BH RLC channel on the first egress link as the egress BH RLC channel of the downlink data. That is, if no suitable egress BH RLC channel is found according to the fourth condition, it indicates that there is no available BH RLC channel for the downlink data and the egress link, and the IAB-node may first reselect an egress link. If no suitable egress link is found, the IAB-node selects other available egress BH RLC channels of the previously selected egress link.

In some other implementations, the IAB-node is an intermediate node of the IAB system, i.e. an IAB-node between an IAB-donor-DU and an accessed IAB-node, and the IAB-node may select an egress BH RLC channel for the downlink data according to a fifth condition.

For example, if the RLC channel mapping table of the IAB-node has BH RLC channel configuration satisfying the fifth condition, the IAB-node takes an egress BH RLC channel in the BH RLC channel configuration as the egress BH RLC channel of the above downlink data. The fifth condition refers to that a last hop address and ingress RLC channel ID in the BH RLC channel configuration match the above downlink data, the egress link to which the next hop address in the BH RLC channel configuration corresponds matches the first egress link of the above downlink data (i.e. the selected egress link), and the egress BH RLC channel in the BH RLC channel configuration is available.

That is, the IAB-node may check the RLC channel mapping table (BH RLC channel mapping configuration) to determine whether there is an available BH RLC channel on the selected egress link (first egress link). If there is a BH RLC channel configuration with a last hop address and ingress RLC channel ID matching the downlink data, the egress link to which the next hop address in the BH RLC channel configuration corresponds matches the selected egress link (first egress link) and the egress link is available for the egress RLC channel in the BH RLC configuration, the IAB The node selects the egress RLC channel in the BH RLC configuration as an egress RLC channel of the packet of downlink data.

In the above implementation, if the RLC channel mapping table of the IAB-node has no BH RLC channel configuration satisfying the fifth condition, in an example, the IAB-node may select an available egress BH RLC channel on the first egress link (i.e. the selected egress link) as the egress BH RLC channel of the downlink data. If there is no available BH RLC channel on the first egress link, the IAB-node selects an available second egress link for the above downlink data. That is, if no suitable egress BH RLC channel is found according to the fifth condition, it indicates that there is no available BH RLC channel for the downlink data and the egress link, and the IAB-node may select any other available egress BH RLC channel of the egress link. If the egress link has no other available egress BH RLC channels, the IAB-node reselects an egress link for the downlink data.

In the above implementation, if the RLC channel mapping table of the IAB-node has no BH RLC channel configuration satisfying the fifth condition, in another example, the IAB-node may select an available second egress link for the downlink data. If there is no available second egress link, the IAB-node selects an available egress BH RLC channel on the first egress link as the egress BH RLC channel of the downlink data. That is, if no suitable egress BH RLC channel is found according to the fifth condition, it indicates that there is no available BH RLC channel for the downlink data and the egress link, and the IAB-node may first reselect an egress link. If no suitable egress link is found, the IAB-node selects other available egress BH RLC channels of the previously selected egress link.

In the embodiment of this disclosure, the IAB-node may also forward the above flow control indication to its parent node (if any). That is, the IAB-node may forward the above flow control indication information to the parent node of the IAB-node.

It was found by the inventors that in a case where the IAB-node is in dual connectivity with two donor-CUs, if the flow control indication received from the child node is for a first donor-CU domain routing that may replace a second donor-CU domain routing, it may be learnt that the second donor-CU domain routing passes a parent node to which the second donor-CU corresponds, and a buffer and congestion state of the first donor-CU domain routing is equivalent to a buffer and congestion state of the second donor-CU domain routing. Therefore, the IAB-node needs to modify the first donor-CU domain routing included in the flow control indication to the second donor-CU domain routing, and then forward it to the parent node to which the second donor-CU corresponds. Hence, the parent node to which the second donor-CU corresponds may be informed of a buffer and congestion situation of a corresponding routing. If the flow control indication received from the child node is not the first donor-CU domain routing that may replace the second donor-CU domain routing, it may be learnt that the first donor-CU domain routing passes through the parent node to which the first donor-CU corresponds, and the IAB-node may directly forward the flow control indication to the parent node to which the first donor-CU corresponds.

For example, as shown in FIG. 13, routing ID#2 belongs to the second donor-CU domain, while routing ID#1 and routing ID#3 belong to the first donor-CU domain. As routing ID#2 has been replaced with routing ID#3 at IAB-node 3, a congested state of routing ID#2 is a congested state of routing ID#3. If IAB-node 3 receives a flow control indication for routing ID#3 from node 4, according to the routing replacement relationship, it may be learnt that routing ID#2 comes from the second donor-CU and needs to be modified to routing ID#2 and forwarded to IAB-node 2, so that IAB-node 2 learns the congested state of routing ID#2.

In some embodiments, if it is determined that the IAB-node is configured with an inter-donor-CU downlink routing replacement table and the routing ID contained in the flow control indication information (referred to as a third routing ID and belonging to the first donor-CU topology domain) belongs to the replacement routing IDs in the inter-donor-CU downlink routing replacement table, the IAB-node modifies the third routing ID in the flow control indication information to a corresponding fourth routing ID (belonging to the second donor-CU topology domain) according to the inter-donor-CU downlink routing replacement table, and transmits the flow control indication information to the egress link to which the second donor-CU corresponds. That is, if the received flow control indication contains an replacement routing ID at the IAB-node, the IAB-node needs to modify the routing ID in the flow control indication to a corresponding replaced routing ID and forwards it to the parent node, without needing to modify an available buffer domain in forwarding.

In some other embodiments, if it is determined that the IAB-node is not configured with an inter-donor-CU downlink routing replacement table, or if it is determined that the routing ID contained in the flow control indication information (referred to as the third routing ID, belonging to the first donor-CU topology domain) does not belong to the replacement routing IDs in the inter-donor-CU downlink routing replacement table, the IAB-node transmits the flow control indication information containing the third routing ID to an egress link to which the first donor-CU corresponds.

FIGs. 14A and 14B are two other schematic diagrams of the routing method of the embodiment of this disclosure, which shall be described from a side of a child node of the IAB-node in the IAB system. The child node is also an IAB-node in the IAB system, and in order to distinguish from the embodiment of FIG. 12, it is referred to as "a child node" in the embodiments of FIGs. 14A and 14B, and contents identical to those in the embodiment of FIG. 12 shall not be repeated herein any further.

It was found by the inventors that in a case where the IAB-node is in dual connectivity with two donor-CUs, if congestion occurs in a first donor-CU domain routing that is able to replace the second donor-CU domain routing, it may be learnt that the buffer and congestion state of the first donor-CU domain routing is equivalent to those of the second donor-CU domain routing, and the second donor-CU domain routing passes a parent node to which the second donor-CU corresponds. Hence, the IAB-node needs to determine the second donor-CU domain routing that is replaced by the first donor-CU domain routing and transmit the flow control indication information containing the second donor-CU domain routing to the parent node to which the second donor-CU corresponds. In this way, the parent node to which the second donor-CU corresponds may be made to learn a buffer and congestion situation of a corresponding routing. If congestion occurs in a first donor-CU domain routing that is unable to replace the second donor-CU domain routing, it may be learnt that the first donor-CU domain routing passes a parent node to which the first donor-CU corresponds, and the IAB-node may transmit the flow control indication information carrying the first donor-CU domain routing to the parent node to which the first donor-CU corresponds.

As shown in FIG. 14A, the method includes:
1401: when a BH RLC channel buffer exceeds a third buffer threshold, a child node of a IAB-node transmits flow control indication information based on BH RLC channel to the IAB-node, wherein the flow control indication information includes an available buffer size for the BH RLC channel and an identifier of the BH RLC channel, so that the IAB-node performs routing on downlink data according to the available buffer size.

As shown in FIG. 14B, the method includes:
1401': when a buffer of a fifth routing exceeds a fourth buffer threshold, a child node of a IAB-node transmits flow control indication information based on routing to the IAB-node, wherein the flow control indication information includes an available buffer size for the fifth routing and a fifth routing ID, so that the IAB-node performs routing on downlink data according to the available buffer size.

In the above embodiment, if it is determined that the child node is configured with an inter-donor-CU downlink routing replacement table and the fifth routing ID belongs to the replacement routing IDs in the inter-donor-CU downlink routing replacement table, the child node contains a sixth routing ID (belonging to the second donor-CU topology domain) to which a fifth routing ID (belonging to the first donor-CU topology domain) in the inter-donor-CU downlink routing replacement table corresponds in the flow control indication information and transmit it to the egress link to which the second donor-CU corresponds. That is, if the downlink buffer of the replacement routing ID exceeds the threshold, as congestion occurs in the replacement routing ID at the child node, that is, the replaced routing ID is in a congested state at the IAB-node, and the replacement routing ID at the child node is invisible to the IAB-node, the child node needs to notify the IAB-node of the congested state of the replaced routing ID. Therefore, the child node looks up a replaced routing ID of the replacement routing ID according to the inter-donor-CU downlink routing replacement table, and includes the replaced routing ID and an available buffer of the replaced routing ID (i.e. an available buffer of the corresponding replacement routing ID) in the flow control indication and transmits them to the IAB-node.

In the above embodiment, if it is determined that the child node is not configured with an inter-donor-CU downlink routing replacement table, or if it is determined that a fifth routing ID (belonging to the first donor-CU topology domain) included in the flow control indication information does not belong to the replacement routing IDs in the inter-donor-CU downlink routing replacement table, the child node transmits the flow control indication information containing the fifth routing ID to the egress link to which the first donor-CU corresponds.

The routing method of the embodiment of this disclosure shall be described below by way of examples.

FIG. 15 is a schematic diagram of a routing process according to the routing method of the embodiment of this disclosure, in which a case where the IAB-node is not configured with an inter-donor-CU downlink routing replacement table is shown. In the example in FIG. 15, IAB-donor DU2 serving as an IAB-node and IAB-node 4 serving as a child node are taken as examples.

Table 1 is an example of a routing ID in the example in FIG. 15.

**Table 1**

| | Routing ID #1 | Routing ID #2 | Routing ID #3 |
|---|---|---|---|
| Destination BAP Address | IAB-node 1 | IAB-node 1 | IAB-node 1 |
| Path ID | Path ID #1 | Path ID #2 | Path ID #3 |

Table 2 is an example of a routing table of IAB-donor DU2 in the example in FIG. 15.

**Table 2**

| Routing Configuration Index | 1 | 2 | 3 |
|---|---|---|---|
| Routing ID | Routing ID #1 | Routing ID #2 | Routing ID #3 |
| Next Hop Address | IAB-node 4 | IAB-node 5 | IAB-node 4 |

Table 3 is an example of a downlink BH RLC mapping table of IAB-donor DU2 in the example in FIG. 15.

**Table 3**

| BH RLC Configuration Index | 1 | 2 | 3 |
|---|---|---|---|
| IP Information | IP Information #1 | IP Information #1 | IP Information #1 |
| Routing ID | Routing ID #1 | Routing ID #2 | Routing ID #3 |
| Next Hop Address | IAB-node 4 | IAB-node 5 | IAB-node 4 |
| Egress RLC Channel | BH RLC Channel #1 | BH RLC Channel #1 | BH RLC Channel #2 |

As shown in FIG. 15, when a buffer of routing ID#1 in IAB-node 4 (a child node) exceeds a certain threshold, IAB-node 4 transmits a flow control indication including routing ID#1 to IAB-donor DU2 (the IAB-node). If IAB-donor DU2 determines that routing ID#1 is in a congested state, an egress link to which IAB-node 4 corresponds is unavailable for routing ID#1.

Therefore, IAB-donor DU2 updates the routing table to Table 4.

**Table 4**

| Routing Configuration Index | 1 | 2 | 3 |
|---|---|---|---|
| Routing ID | Routing ID #1 | Routing ID #2 | Routing ID #3 |
| Next Hop Address | IAB-node 4 | IAB-node 5 | IAB-node 4 |
| Availability | **No** | Yes | Yes |

When IAB-donor DU2 receives downlink data with a header carrying IP Information#1, it first maps the data to routing ID#1, and then checks the routing table to find if there is an available routing for routing ID#1. If it is found that a routing ID in a routing configuration matches routing ID#1 but an egress link to which a next hop address IAB-node 4 in the routing configuration corresponds is not available for routing ID#1, it indicates that there exists no available egress link for routing ID#1.

Then, the IAB-donor DU2 checks whether there exists an available egress link for the destination address IAB-node 1 in the packet header. If it is found that a destination address in two routing configurations is IAB-node 1 and egress links to which next hop addresses (IAB-node 5 and IAB-node 4) in the two routing configurations correspond are available for routing IDs (routing ID#2 and routing ID#3) in the two routing configurations, IAB-donor DU2 may select the egress links to which the next hop addresses (IAB-node 5 and IAB-node 4) in the two routing configurations correspond and take them as egress links of data packets.

Thereafter, the IAB-donor DU2 selects an egress BH RLC channel ID and checks the downlink RLC channel mapping table. Assuming that the selected routing and egress link are routing ID#3 and IAB-node 4, respectively, the IAB-donor DU2 checks whether there exists egress RLC channels available for routing ID#3 and IAB-node 4. If it is found that a routing ID and a next hop address in a BH RLC configuration match routing ID#3 and IAB-node 4, the IAB-donor DU2 selects BH RLC Channel#2 in the BH RLC configuration and takes them as the egress RLC channel.

If the egress RLC channel to which IAB-node 4 corresponds is unavailable for BH RLC Channel#2, for example, IAB-donor DU2 determines that BH RLC Channel#2 is in a congested state according to the flow control indication transmitted by IAB-node 4. The DL BH RLC mapping table of IAB-donor DU2 is updated to Table 5.

**Table 5**

| BH RLC Configuration Index | 1 | 2 | 3 |
|---|---|---|---|
| Routing ID | Routing ID #1 | Routing ID #2 | Routing ID #3 |
| Next Hop Address | IAB-node 4 | IAB-node 5 | IAB-node 4 |
| Egress RLC Channel | BH RLC Channel #1 | BH RLC Channel #1 | BH RLC Channel #2 |
| Availability | Yes | Yes | No |

In the example in FIG. 15, IAB-donor DU2 may also select other egress BH RLC channels, such as selecting BH RLC Channel#1 as the egress RLC channel, or, reselect egress links of the downlink data, such as selecting egress links to which routing ID#2 and IAB-node 5 correspond, and then select an egress RLC channel for the egress link to which IAB-node 5 corresponds.

FIG. 16 is another schematic diagram of the routing process according to the routing method of the embodiment of this disclosure, in which a case where the IAB-node is configured with an inter-donor-CU downlink routing replacement table is shown. In the example in FIG. 16, IAB-node 4 serving as an IAB-node and IAB-node 3 serving as a child node are taken as examples.

Table 6 is an example of a routing ID in the example in FIG. 16.

**Table 6**

| | Routing ID #1 | Routing ID #2 | Routing ID #3 | Routing ID #4 | Routing ID #5 | Routing ID #6 |
|---|---|---|---|---|---|---|
| Destination BAP Address | IAB-node 1 | IAB-node 1 | IAB-node 1 | IAB-node 1 | IAB-node 1 | IAB-node 1 |
| Path ID | Path ID #1 | Path ID #2 | Path ID #3 | Path ID #4 | Path ID #5 | Path ID #6 |

In Table 6, routing ID#1, routing ID#2, routing ID#3 and routing ID#6 belong to a donor-CU2 domain, and routing ID#4 and routing ID#5 belong to a donor-CU1 domain.

Table 7 is an example of a routing table of IAB-node 4 in the example in FIG. 16.

**Table 7**

| Routing Configuration Index | 1 | 2 |
|---|---|---|
| Routing ID | Routing ID #4 | Routing ID #5 |
| Next Hop Address | IAB-node 2 | IAB-node 3 |

Table 8 is an example of a downlink BH RLC mapping table of IAB-node 4 in the example in FIG. 16.

**Table 8**

| BH RLC Configuration Index | 1 | 2 |
|---|---|---|
| Ingress RLC Channel | BH RLC Channel #1 | BH RLC Channel #2 |
| Prior Hop Address | IAB-donor DU1 | IAB-donor DU1 |
| Next Hop Address | IAB-node 2 | IAB-node 3 |
| Egress RLC Channel | BH RLC Channel #1 | BH RLC Channel #1 |

In the example shown in FIG. 16, as shown in FIG. 16, IAB-node 4 needs to receive downlink data of the donor-CU1 domain and donor-CU2 domain, and donor-CU1 establishes F1 connection with IAB-node 4, hence, a first donor-CU of IAB-node 4 is donor-CU1, and a second donor-CU of IAB-node 4 is donor-CU2. At IAB-node 4, it is needed to replace routing belonging to the donor-CU2 domain with routing belonging to the donor-CU1 domain. The inter-donor-CU downlink routing replacement table in IAB-node 4 takes Table 9 as an example.

**Table 9**

| BAP header re-writing Configuration Index | 1 | 2 |
|---|---|---|
| Routing ID | Routing ID #1 | Routing ID #3 |
| Re-writing Routing ID | Routing ID #4 | Routing ID #5 |

In addition, in the example in FIG. 16, as shown in FIG. 16, IAB-node 3 needs to receive downlink data of the donor-CU1 domain and donor-CU2 domain, and donor-CU2 establishes F1 connection with IAB-node 3, hence, a first donor-CU of IAB-node 3 is donor-CU2, and a second donor-CU of IAB-node 3 is donor-CU1. At IAB-node 3, it is needed to replace routing belonging to the donor-CU1 domain (routing ID #5) with routing belonging to the donor-CU2 domain (routing ID #6). The inter-donor-CU downlink routing replacement table in IAB-node 3 takes Table 10 as an example.

**Table 10**

| BAP header re-writing Configuration Index | 1 |
|---|---|
| Routing ID | Routing ID #5 |
| Re-writing Routing ID | Routing ID #6 |

As shown in FIG. 16, when a buffer of routing ID#6 in IAB-node 3 exceeds a certain threshold, as routing ID#6 belongs to the replacement routing IDs in the routing replacement table, IAB-node 3 transmits a flow control indication to IAB-node 4, including a replaced routing ID (routing ID#5) to which routing ID#6 corresponds.

Hence, IAB-node 4 determines that routing ID#5 is in a congested state, and an egress link to which IAB-node 3 corresponds is unavailable for routing ID#5. The routing table of IAB-node 4 is updated to Table 11.

**Table 11**

| Routing Configuration Index | 1 | 2 |
|---|---|---|
| Routing ID | Routing ID #4 | Routing ID #5 |
| Next Hop Address | IAB-node 2 | IAB-node 3 |
| Availability | Yes | No |

When IAB-node 4 receives downlink data with a packet header carrying routing ID#3, it is determined that routing ID#3 is the replaced routing ID in the inter-donor-CU downlink routing replacement table, and routing ID#3 in the packet header is modified to a corresponding replacement routing ID (routing ID#5) according to the inter-donor-CU downlink routing replacement table.

Thereafter, IAB-node 4 selects an egress link according to routing ID#5 and finds that a routing ID in a routing configuration matches routing ID#5, but an egress link to which a next hop address IAB-node 3 in the routing configuration corresponds is unavailable for routing ID#5, indicating that there exists no available egress link for routing ID#5.

Afterwards, IAB-node 4 checks again whether the destination address IAB-node 1 of routing ID#5 has an available egress link. If it is found that a destination address in another routing configuration is IAB-node 1 and the egress link to which the next hop address (IAB-node 2) corresponds is available for the routing ID (routing ID#4) of the routing configuration, IAB-node 4 may select the egress links to which the next hop addresses (IAB-node 2) in the two routing configurations correspond as egress links of data packet.

Next, IAB-node 4 selects an egress BH RLC channel. The IAB-node 4 checks the downlink RLC channel mapping table, and finds that a BH RLC configuration is matched according to a last hop address (IAB-donor DU1) and an ingress RLC channel (BH RLC Channel#1) of the data packet and the selected egress link (IAB-node 2), it may select an egress RLC channel (BH RLC Channel#1) in the BH RLC configuration as the egress channel. However, if IAB-node 4 determines that BH RLC Channel#1 is unavailable according to the flow control indication transmitted by IAB-node 2, it may not select BH RLC Channel#1 as an egress RLC channel.

In addition, as shown in FIG. 16, IAB-node 4 may forward the flow control indication to its parent node IAB-donor DU2. As routing ID#5 included in the received flow control indication belongs to a replacement routing in the inter-donor-CU downlink routing replacement table, IAB-node 4 needs to modify routing ID#5 in the flow control indication to a corresponding replaced routing ID (routing ID#3) and then forwards it to the parent node, without needing to modify an available buffer domain in forwarding. Thus, IAB-donor DU2 determines that routing ID#3 is in a congested state, and the egress link to which IAB-node 4 corresponds is unavailable for routing ID#3.

In addition, IAB-donor DU2 may modify a routing table of its own to Table 12.

**Table 12**

| Routing Configuration Index | 1 | 2 | 3 |
|---|---|---|---|
| Routing ID | Routing ID #1 | Routing ID #2 | Routing ID #3 |
| Next Hop Address | IAB-node 4 | IAB-node 5 | IAB-node 4 |
| Availability | Yes | Yes | No |

It should be noted that FIGs. 13-16 only schematically illustrates the embodiment of this disclosure; however, this disclosure is not limited thereto. For example, an order of execution of the operations may be appropriately adjusted, and furthermore, some other operations may be added, or some steps therein may be reduced. And appropriate variants may be made by those skilled in the art according to the above contents, without being limited to what is contained in FIGs. 13-16.

In addition, the above embodiments only illustrate the embodiment of this disclosure. However, this disclosure is not limited thereto, and appropriate variants may be made on the basis of these embodiments. For example, the above embodiments may be executed separately, or one or more of them may be executed in a combined manner.

According to the method of the embodiment of this disclosure, selection of congested routing and BH RLC channels may be avoided, and the problem of congestion and drop of downlink data may be alleviated and solved.

### Embodiment of a second aspect

The embodiment of this disclosure provides a routing method, in which uplink data are routed.

FIG. 17 is a schematic diagram of the routing method of the embodiment of this disclosure, which shall be described from a side of an IAB-node in an IAB system, in which the IAB-node serves as a parent node. As shown in FIG. 17, the method includes:
1701: when it is detected that an RLF occurs in one or more ingress links, an IAB-node transmits RLF indication information to a child node, the RLF indication information including an identifier of a routing in a routing configuration of a routing table of the IAB-node with an egress link corresponding to a next hop address being the link in which the RLF occurs, so that the child node performs routing on uplink data according to the RLF indication information.

In the embodiment of this disclosure, if the IAB-node (IAB-MT) detects that an RLF occurs in one or more ingress links, for a child node to which each egress link of the IAB-node corresponds, the IAB-node (IAB-DU) includes routing IDs corresponding to routing configuration in the routing configurations (BH routing configuration) of the routing table with links to which all next hop addresses correspond are the links where RLF occurs in the RLF indication and transmit them to the child node, so that the child node performs re-routing on data on the links where RLF occurs.

In the embodiment of this disclosure, in order to transmit uplink data, replacement routing of one or more second donor-CU domains may be configured for routing of some first donor-CU domains. In a case where the IAB-node establishes dual connectivity with the first donor-CU and the second donor-CU, the IAB-node establishes F1 connection with the first donor-CU. A part of the uplink data need to be transmitted to a parent node of the second donor-CU domain via the IAB-node. The routing ID of part of the first donor-CU domain needs to be modified to the routing ID of the second donor-CU domain and then is routed. For example, in FIG. 18, the routing belonging to the first donor-CU domain (routing ID#3) needs to be converted to the routing belonging to the second donor-CU domain (routing ID#2) and then is transmitted to the parent node of the second donor-CU domain (IAB-node 2). Therefore, a table of mapping relationship from the routing ID of the first donor-CU domain to the routing ID of the second donor-CU domain is configured for the IAB-node , that is, an inter-donor-CU uplink routing replacement table.

In addition, in the same donor-CU domain, the IAB-nodes disconnects a link from an original parent node and establishes a link to a new parent node, such as switching from one parent node to another, or reestablishing from one parent node RRC to another. The uplink data need to be routed to a new donor-DU, and a destination donor-DU in an original uplink packet header is different from a new donor-DU. In order to prevent the uplink data from being dropped by the new donor-DU, it is needed to modify the routing ID in the packet header to a routing ID that may be routed to the new donor-DU. It is needed to configure the IAB-node with a table of mapping relationship from the original routing ID to the new routing ID, that is, an inter-donor-DU routing replacement table.

In addition, it was found by the inventors that in the case where the IAB-node is in dual connectivity with two donor-CUs, the uplink data need to be routed to different donor-CU domains, and routing to different donor-CU domains may conflict. For example, in FIG. 18, routing ID#1 and routing ID#2 may be identical. For uplink routing at the IAB-node, it is needed to configure the IAB-node with routing tables for different donor-CU domains, i.e. a first routing table for the first donor-CU domain and a second routing table for the second donor-CU domain.

In addition, it was found by the inventors that in the case where the IAB-node is in dual connectivity with two donor-CUs, if the link in which an RLF occurs is an ingress link to which the second donor-CU corresponds, a second donor-CU domain routing with a next hop being a parent node to which the second donor-CU corresponds is in an unavailable state, and it may be learnt that the first donor-CU domain routing replaced by the second donor-CU domain routing is also in an unavailable state at the child node. Therefore, the IAB-node needs to transmit the RLF indication information containing the first donor-CU domain routing to the child node. If the link in which an RLF occurs is the ingress link to which the first donor-CU corresponds, the first donor-CU domain routing with the next hop being the parent node to which the first donor-CU corresponds is unavailable, and it may be learnt that the routing is also unavailable at the child node. Hence, the IAB-node needs only to transmit the RLF indication information containing the first donor-CU domain routing to the child node, so that the child node learns the state of the routing.

In some embodiments of the embodiment of this disclosure, if it is determined that the IAB-node is configured with an inter-donor-CU uplink routing replacement table and the link in which an RLF occurs is the ingress link to which the second donor-CU corresponds, the IAB-node determines according to a second routing table (a routing table for the second donor-CU topology domain) a third routing ID with the egress link to which the next hop address corresponds is the ingress link to which the second donor-CU corresponds. The IAB-node determines a fourth routing ID (belonging to the first donor-CU topology domain) that needs to be replaced with the third routing ID (belonging to the second donor-CU topology domain) according to the inter-donor-CU uplink routing replacement table, and transmits the RLF indication information to the child node, the RLF indication information including the fourth routing ID.

That is, if it is determined according to the second routing table that a routing ID to which the link in which an RLF occurs corresponds is an replacement routing ID in the inter-donor-CU uplink routing replacement table, as the replacement routing ID at the IAB-node is unavailable, that is, the replaced routing ID is also unavailable at the child node, while the replacement routing ID at the IAB-node is invisible to the IAB-node, the IAB-node needs to notify the child node of a state of the replaced routing ID. Thus, the IAB-node looks up the replaced routing ID of the replacement routing ID according to the inter-donor-CU uplink routing replacement table, and includes the replaced routing ID in the RLF indication and transmits it to the child node.

Taking FIG. 18 as an example, if IAB-node 3 detects that the link in which an RLF occurs is the parent node IAB-node 2 to which the second donor-CU corresponds, routing ID#2 with a next hop being IAB-node 2 is unavailable. It may be inferred according to the inter-donor-CU uplink routing replacement table that routing ID#2 needs to replace routing ID#3 of the first donor-CU domain, indicating that routing ID#3 is also unavailable at IAB-node 4. IAB-node 3 needs to transmit RLF indication information containing routing ID#3 to IAB-node 4, so that IAB-node 4 learns that routing ID#3 is unavailable.

In some other embodiments of the embodiment of this disclosure, if it is determined that the IAB-node is not configured with an inter-donor-CU uplink routing replacement table, or that the link in which an RLF occurs is the ingress link to which the first donor-CU corresponds, wherein the IAB-node establishes F1 connection with the first donor-CU, the IAB-node determines according to the first routing table (a routing table for the first donor-CU topology domain) a third routing ID with the egress link to which the next hop address corresponds being the ingress link to which the first donor-CU corresponds. The IAB-node transmits the RLF indication information to the child node, the RLF indication information including the third routing ID (belonging to the first donor-CU topology domain).

FIG. 19 is another schematic diagram of the routing method of the embodiment of this disclosure, which shall be described from a side of a child node of the IAB-node in the IAB system. The child node is also an IAB-node in the IAB system, and in order to distinguish from the embodiment of FIG. 17, it is referred to as "a child node" in the embodiment of FIG. 19, and contents identical to those in the embodiment of FIG. 17 shall not be repeated herein any further.

As shown in FIG. 19, the method includes:
1901: a child node receives RLF indication information from an IAB-node, the RLF indication information including an identifier of a routing with a link corresponding to a next hop address being a link in which an RLF occurs; and
1902: the child node performs routing on uplink data according to the RLF indication information.

In some embodiments, in 1902, the child node determines whether the above routing is available according to the RLF indication information, and performs routing on the uplink data according to whether the routing is available. The child node determines according to the RLF indication information that the link to which the IAB-node corresponds is unavailable for the routing. That is, when the child node (IAB-MT) receives an RLF indication containing a routing ID, it determines that the egress link to which the IAB-node corresponds is unavailable for the routing (the routing to which the routing ID contained in the RLF indication corresponds), and performs re-routing selection on data of the routing ID (uplink data).

For example, if the link to which the IAB-node corresponds is the ingress link to which the first donor-CU corresponds, the child node determines that the link to which the IAB-node corresponds is unavailable for the routing in the first routing table. The first routing table is a routing table for the first donor-CU topology domain. The child node may also modify availability of the routing in the first routing table to be not available (NO).

For another example, if the link to which the IAB-node corresponds is the ingress link to which the second donor-CU corresponds, the child node determines that the link to which the IAB-node corresponds is unavailable for the routing in the second routing table. The second routing table is a routing table for the second donor-CU topology domain. The child node may also modify availability of the routing in the second routing table to be not available (NO).

In the embodiment of this disclosure, the child node performs routing on the uplink data according to whether the above routing is available, including selecting an egress link for the uplink data according to whether the routing is available. That is, when the child node (IAB-MT) receives the RLF indication containing a routing ID from the IAB-node, it may determine that the link to which the IAB-node corresponds becomes unavailable for the routing ID. Thus, in selecting routing for data on the routing ID (uplink data), the egress link will not be selected.

In some embodiments, if it is determined that the child node is configured with an inter-donor-CU uplink routing replacement table and the first routing ID (belonging to the first donor-CU topology domain) in the packet header of the uplink data belongs to the replaced routing ID in the inter-donor-CU uplink routing replacement table, the child node replaces the first routing ID in the BAP packet header of the uplink data with a corresponding second routing ID (belonging to the second donor-CU topology domain) according to the inter-donor-CU uplink routing replacement table, and then determines whether the second routing table of the child node has routing configuration satisfying a first condition.

If there is a routing configuration satisfying a first condition in the second routing table of the child node, the child node takes an egress link to which a next hop address in the routing configuration corresponds as a first egress link of the uplink data. The first condition refers to that a routing ID in the routing configuration matches the second routing ID, and the egress link to which the next hop address in the routing configuration corresponds is available for a routing in the routing configuration.

In the above embodiment, if there is no routing configuration satisfying the first condition in the second routing table of the child node, it is determined whether there is a routing configuration satisfying a third condition in the second routing table of the child node. If there is a routing configuration satisfying the third condition in the second routing table of the child node, the child node takes the egress link to which the next hop address in the routing configuration corresponds as an egress link of the packet of the uplink data. The third condition refers to that a destination BAP address of the routing ID in the routing configuration matches a destination BAP address of the second routing ID, and the egress link to which the next hop address in the routing configuration corresponds is available for the routing in the routing configuration.

In the above embodiment, if there is no routing configuration satisfying the third condition in the second routing table of the child node, it is determined whether the child node is configured with a second inter-donor-CU routing replacement table. If the child node is configured with the second inter-donor-CU routing replacement table and the second routing ID belongs to a replaced routing ID in the second inter-donor-DU routing replacement table and is replaced with a fifth routing ID, it is determined whether there is a routing configuration satisfying a fifth condition in the second routing table of the child node.

If there is a routing configuration satisfying the fifth condition in the second routing table of the child node, the child node modifies a second routing ID in a header of a data packet of the uplink data into a corresponding fifth routing ID according to the second inter-donor-DU routing replacement table, and then takes the egress link to which the next hop address in the routing configuration corresponds as an egress link of the data packet of the uplink data. The fifth condition includes that the routing ID in the routing configuration matches the fifth routing ID or a destination address in the routing configuration matches a destination address of the fifth routing ID, and the egress link to which the next hop address in the routing configuration corresponds is available for the routing in the routing configuration.

In the above embodiment, if there is no routing configuration satisfying the fifth condition in the second routing table of the child node, it indicates that there is no available egress link in the second donor-CU domain, and whether the child node is configured with a first routing table is determined. If the child node is configured with a first routing table, whether there is a routing configuration satisfying a seventh condition in the first routing table of the child node is determined.

If there is a routing configuration satisfying the seventh condition in the first routing table of the child node, the child node modifies a first routing ID in the packet header of the data packet of the uplink data into a seventh routing ID, and takes the egress link to which the next hop address in the routing configuration corresponds as an egress link of the data packet of the uplink data. The seventh condition includes that the routing ID in the routing configuration matches the seventh routing ID or a destination address in the routing configuration matches a destination address of the seventh routing ID, and the egress link to which the next hop address in the routing configuration corresponds is available for the routing in the routing configuration.

In some other embodiments, if it is determined that the child node is not configured with an inter-donor-CU uplink routing replacement table, or if the first routing ID (belonging to the first donor-CU topology domain) in the packet header of the uplink data does not belong to the replaced routing ID in the inter-donor-CU uplink routing replacement table, whether the first routing table of the child node has routing configuration satisfying a second condition is determined.

If there is routing configuration satisfying the second condition in the first routing table of the child node, the egress link to which the next hop address in the routing configuration corresponds is taken as the first egress link of the downlink data. The second condition refers to that a routing ID in the routing configuration matches the first routing ID, and the egress link to which the next hop address in the routing configuration corresponds is available for a routing in the routing configuration.

That is, when the child node receives an uplink data, it may check the routing table to determine whether the routing ID in the packet header has an available egress link. If there is a routing configuration with a routing ID matching the routing ID in the packet header (both a destination BAP address and a path ID are matched) and an egress link to which a next hop address in the routing configuration corresponds is available for the routing ID, the egress link to which the next hop address in this routing configuration corresponds is selected as the egress link of the data packet.

In the above embodiment, if there is no routing configuration satisfying the second condition in the first routing table of the child node, whether there is routing configuration satisfying a fourth condition in the first routing table of the child node is determined. If there is routing configuration satisfying the fourth condition in the first routing table of the child node, an egress link to which a next hop address in the routing configuration corresponds is taken as an egress link of the data packet of the uplink data. The fourth condition refers to that a destination BAP address of a routing ID in the routing configuration matches the destination BAP address of the first routing ID, and the egress link to which the next hop address in the routing configuration corresponds is available for a routing in the routing configuration.

That is, if no suitable egress link is found according to the second condition, it indicates that there is no available egress link for the routing ID in the packet header. The child node may further check if there is available routing for the destination BAP address in the packet header, and if there is a routing configuration with a destination BAP address matching the destination BAP address in the packet header and an egress link to which a next hop address in the routing configuration corresponds is available for the routing ID of the routing configuration, the egress link to which the next hop address in the routing configuration corresponds is selected as the egress link of the data packet.

In the above embodiment, if there is no routing configuration satisfying the fourth condition in the first routing table of the child node, whether the child node is configured with a first inter-donor-DU routing replacement table is determined. If the child node is configured with the first inter-donor-DU routing replacement table and the first routing ID belongs to a replaced routing ID in the first inter-donor-DU routing replacement table and is replace by a sixth routing ID, whether there is routing configuration satisfying a sixth condition in the first routing table of the child node is determined.

If there is routing configuration satisfying the sixth condition in the first routing table of the child node, the child node modifies the first routing ID in the packet header of the uplink data to a corresponding sixth routing ID according to the first inter-donor-DU routing replacement table, and takes an egress link to which a next hop address in the routing configuration corresponds as the egress link of the data packet of the uplink data. The sixth condition includes that the routing ID in the routing configuration matches the sixth routing ID or the destination address matches a destination address of the sixth routing ID, and the egress link to which the next hop address in the routing configuration corresponds is available for a routing in the routing configuration.

That is, if no suitable egress link is found according to the fourth condition, it indicates that there is no available egress link for the destination address of the data. The child node may further check if there are available routings for other destination addresses, and if there is a routing configuration with an egress link to which a next hop address corresponds being available for the routing ID of the routing configuration, the egress link to which the next hop address of this routing configuration corresponds is selected as the egress link of the data packet. Thus, the selected destination address in the routing configuration is different from the destination address in the packet header. In order to prevent the uplink data from being dropped by the IAB-donor DU, it is needed to modify the destination address in the packet header to the destination address in the routing configuration, and modify the path identifier in the packet header to a path ID of this routing configuration.

In the above embodiment, if there is no routing configuration satisfying the sixth condition in the first routing table of the child node, whether the child node is configured with a second routing table is determined. If the child node is configured with a second routing table, whether there is routing configuration satisfying an eighth condition in the second routing table of the child node is determined.

If there is routing configuration satisfying the eighth condition in the second routing table of the child node, the child node modifies the first routing ID in the packet header of the uplink data to an eighth routing ID, and takes an egress link to which a next hop address in the routing configuration corresponds as the egress link of the data packet of the uplink data. The eighth condition includes that the routing ID in the routing configuration matches the eighth routing ID or the destination address matches a destination address of the eighth routing ID, and the egress link to which the next hop address in the routing configuration corresponds is available for a routing in the routing configuration.

That is, if no suitable egress link is found according to the eighth condition, it indicates that there is no available egress link for a donor-CU domain to which the first routing belongs. The child node may further check if there is an available routing in another donor-CU domain.

In the above embodiment, if no suitable egress link is found for the uplink data in the method described in the above embodiment, the child node may drop the uplink data or stop transmission of the uplink data.

Selecting an egress link for the downlink data by the child node are illustrated above with reference to various embodiments. However, this disclosure is not limited thereto, and appropriate variants may be made on the basis of these embodiments. For example, the above embodiments may be executed separately, or one or more of them may be executed in a combined manner.

In the above embodiment, after selecting the egress link, the child node may further select an egress BH RLC channel for the above uplink data. A specific selection method is not limited in this disclosure, and existing methods or other implementable methods may also be used.

In the embodiment of this disclosure, the child node may further proceed with forwarding the above RLF indication to its child node (if any). That is, the child node may forward the above RLF indication information to a child node of the child node.

It was found by the inventors that in the case where the IAB-node is in dual connectivity with two donor-CUs, if an RLF indication information is received from the parent node to which the second donor-CU corresponds and the RLF indication information contains the second donor-CU domain routing, the second donor-CU domain routing is unavailable. In addition, it may be learnt that the first donor-CU domain routing replaced by the second donor-CU domain routing is also unavailable at the child node. Therefore, the IAB-node needs to transmit the RLF indication information containing the first donor-CU domain routing to the child node. If an RLF indication information is received from the parent node to which the first donor-CU corresponds and the RLF indication information contains the first donor-CU domain routing, it may be learnt that the routing is unavailable, and the routing is also unavailable at the child node. Therefore, the IAB-node transmits the RLF indication information containing the first donor-CU domain routing to the child node, so that the child node learns a state of the routing.

In some embodiments, if it is determined that the child node is configured with an inter-donor-CU uplink routing replacement table, the RLF indication information is received from an ingress link to which the second donor-CU corresponds and the RLF indication information includes a third routing ID (belonging to the second donor-CU topology domain), the child node determines a fourth routing ID (belonging to the first donor-CU topology domain) needing to be replaced with the third routing ID according to the inter-donor-CU uplink routing replacement table, then transmits the RLF indication information to a child node of its own, the RLF indication information including the fourth routing ID. That is, if the RLF indication received by the child node contains an replacement routing ID at the child node, the routing ID in the RLF indication needs to be modified to a corresponding replaced routing ID and then forwarded to a child node.

In some other embodiments, if it is determined that the child node is not configured with an inter-donor-CU uplink routing replacement table, or if the RLF indication information is received from the ingress link to which the first donor-CU corresponds, wherein the RLF indication information includes a third routing ID (belonging to the first donor-CU topology domain), the child node transmits RLF indication information to a child node of its own, the RLF indication information including the third routing ID.

Taking FIG. 18 as an example, if IAB-node 3 receives RLF indication information from a parent node IAB-node 2 to which the second donor-CU corresponds, the RLF indication information including routing ID#2, it may be learnt that routing ID#2 is unavailable. It can be seen from a routing replacement relationship that routing ID#2 needs to replace routing ID#3 of the first donor-CU domain, indicating that routing ID#3 is also unavailable at IAB-node 4. IAB-node 3 needs to transmit the RLF indication information containing routing ID#3 to IAB-node 4, so that IAB-node 4 learns that routing ID#3 is unavailable.

The routing method of the embodiment of this disclosure shall be described below by way of examples.

FIG. 20 is a schematic diagram of a further example of the routing relationship of the IAB-node, showing a case where the IAB-node is not configured with an inter-donor-CU uplink routing replacement table. In the example in FIG. 20, IAB-node 3 serving as the IAB-node and IAB-node 4 serving as a child node are taken as an example.

Table 13 is an example of a routing ID in the example in FIG. 20.

**Table 13**

| | Routing ID #1 | Routing ID #2 | Routing ID #3 | Routing ID #4 |
|---|---|---|---|---|
| Destination Address | IAB-donor DU1 | IAB-donor DU1 | IAB-Donor DU1 | IAB-Donor DU2 |
| Path ID | Path ID #1 | Path ID #2 | Path ID #3 | Path ID #1 |

Table 14 is an example of a routing table of IAB-node 3 (i.e. the first routing table) in the example in FIG. 20.

**Table 14**

| Routing Configuration Index | 1 | 2 |
|---|---|---|
| Routing ID | Routing ID #1 | Routing ID #2 |
| Next Hop Address | IAB-node 1 | IAB-node 2 |

Table 15 is an example of a routing table of IAB-node 4 (i.e. the first routing table) in the example in FIG. 20.

**Table 15**

| Routing Configuration Index | 1 | 2 | 3 | 4 |
|---|---|---|---|---|
| Routing ID | Routing ID #1 | Routing ID #2 | Routing ID #3 | Routing ID #4 |
| Next Hop Address | IAB-node 3 | IAB-node 3 | IAB-node 6 | IAB-node 6 |
| Availability | Yes | Yes | Yes | Yes |

Table 16 is an inter-donor-DU routing replacement table of IAB-node 4 (i.e. the first inter-donor-DU routing replacement table) in the example in FIG. 20.

**Table 16**

| Inter-donor DU re-writing Index | 1 |
|---|---|
| Routing ID | Routing ID #1 |
| Re-writing Routing ID | Routing ID#4 |

In the example in FIG. 20, IAB-node 3 establishes dual connectivity radio links with IAB-node 1 and IAB-node 2. If IAB-node 3 detects that an RLF occurs in the radio link corresponding to IAB-node 1, no RLF occurs in the radio link corresponding to IAB-node 2. IAB-node 3 may indicate a routing ID with a next hop address being IAB-node 1 to IAB-node 4, that is, including routing ID#1 in the RLF indication to indicate to IAB-node 4.

IAB-node 4 receives an RLF indication containing routing ID#1 from an ingress link to which IAB-node 3 corresponds, and IAB-node 4 determines that the link to which IAB-node 3 corresponds is unavailable for routing ID#1 (but the link to which IAB-node 3 corresponds is available for routing ID#2). The routing table in IAB-node 4 is updated to Table 17.

**Table 17**

| Routing Configuration Index | 1 | 2 | 3 | 4 |
|---|---|---|---|---|
| Routing ID | Routing ID #1 | Routing ID #2 | Routing ID #3 | Routing ID #4 |
| Next Hop Address | IAB-node 3 | IAB-node 3 | IAB-node 6 | IAB-node 6 |
| Availability | No | Yes | Yes | Yes |

When IAB-node 4 receives uplink data with a packet header carrying routing ID#1, it first checks the routing table to check if there is a routing available for routing ID#1. If it is found that a routing ID in a routing configuration matches routing ID#1 but an egress link to which a next hop address IAB-node 3 in the routing configuration corresponds is unavailable for routing ID#1, it indicates that there is no egress link available for routing ID#1.

Then, IAB-node 4 further checks whether there is an egress link available for the destination address IAB-donor DU1 in the packet header. If it is found that destination addresses of routing ID#2 and routing ID#3 are IAB-node DU1 and the egress links to which next hop addresses (IAB-node 3 and IAB-node 6) correspond are available for routing ID#2 and routing ID#3, respectively, IAB-node 4 may select an egress link to which the next hop address of routing ID#2 or routing ID#3 (IAB-node 3 or IAB-node 6) corresponds as the egress link of the data packet.

In addition, if the egress links to which IAB-node 3 and IAB-node 6 correspond are unavailable for routing ID#2 and routing ID#3, respectively, for example, when an RLF indication received by IAB-node 4 from IAB-node 6 contains routing ID#3, IAB-node 4 deems that the egress link to which IAB-node 6 correspond is unavailable for routing ID#3, which indicates that there is no available egress link for the destination address of routing ID#1. IAB-node 4 further checks whether routing ID#1 may be replaced with a routing of another destination address. IAB-node 4 looks up the inter-donor-DU routing replacement table and finds that routing ID#4 may replace routing ID#1 and the egress link to which the next hop address (IAB-node 6) corresponds is available for routing ID#4, IAB-node 4 may select the egress link to which the next hop address (IAB-node 6) of routing ID#4 corresponds as the egress link of the data packet. As the destination address (IAB-donor DU2) of routing ID#4 is different from the destination address (IAB-donor DU1) in the packet header, in order that the uplink data are not dropped by IAB-donor DU2, it is needed to modify the destination address in the packet header to IAB-donor DU2, or modify routing ID#1 in the packet header to routing ID#4.

FIG. 21 is a schematic diagram of still another example of the routing relationship of the IAB-node, showing a case where the IAB-node is configured with an inter-donor-CU uplink routing replacement table. In the example in FIG. 21, IAB-node 6 serving as a IAB-node and IAB-node 4 serving as a child node are taken as an example.

Table 18 is an example of a routing ID in the example in FIG. 21, wherein routing ID#1, routing ID#2, routing ID#3, routing ID#6 and routing ID#7 belong to the donor-CU1 domain, and routing ID#4 and routing ID#5 belong to the donor-CU2 domain.

**Table 18**

| | Routing ID#1 | Routing ID #2 | Routing ID #3 | Routing ID #4 | Routing ID #5 | Routing ID #6 | Routing ID #7 |
|---|---|---|---|---|---|---|---|
| Destination Address | IAB-donor DU1 | IAB-donor DU1 | IAB-Donor DU1 | IAB-Donor DU2 | IAB-Donor DU2 | IAB-Donor DU1 | IAB-Donor DU1 |
| Path ID | Path ID #1 | Path ID #2 | Path ID #3 | Path ID #1 | Path ID #2 | Path ID #4 | Path ID #5 |

In the example in FIG. 21, IAB-node 4 needs to transmit data to both the donor-CU1 domain and the donor-CU2 domain, donor-CU1 establishes F1 connection with IAB-node 4, a first donor-CU of IAB-node 4 is donor-CU1, and a second donor-CU thereof is donor-CU2. At IAB-node 4, it is needed to replace routings belonging to the donor-CU1 domain (routing ID#6 and routing ID#7) with routings belonging to the donor-CU2 domain (routing ID#4 and routing ID#5). The inter-donor-CU uplink routing replacement table in IAB-node 4 is shown in Table 19.

**Table 19**

| BAP header re-writing Configuration Index | 1 | 2 |
|---|---|---|
| Routing ID | Routing ID #6 | Routing ID #7 |
| Re-writing Routing ID | Routing ID #5 | Routing ID #4 |

Table 20 is an example of a first routing table of IAB-node 4 for the donor-CU1 domain.

**Table 20**

| Routing Configuration Index | 1 | 2 |
|---|---|---|
| Routing ID | Routing ID #1 | Routing ID #2 |
| Next Hop Address | IAB-node 3 | IAB-node 3 |
| Availability | Yes | Yes |

Table 21 is an example of a second routing table of IAB-node 4 for the donor-CU2 domain.

**Table 21**

| Routing Configuration Index | 1 | 2 |
|---|---|---|
| Routing ID | Routing ID #5 | Routing ID #4 |
| Next Hop Address | IAB-node 6 | IAB-node 6 |
| Availability | Yes | Yes |

In the example in FIG. 21, IAB-node 6 needs to transmit data to both the donor-CU1 domain and the donor-CU2 domain, donor-CU2 establishes F1 connection with IAB-node 6, a first donor-CU of IAB-node 6 is donor-CU2, and a second donor-CU thereof is donor-CU1. At IAB-node 6, it is needed to replace a routing belonging to the donor-CU2 domain (routing ID#5) with a routing belonging to the donor-CU1 domain (routing ID#3). The inter-donor-CU uplink routing replacement table in IAB-node 6 is shown in Table 22.

**Table 22**

| BAP header re-writing Configuration Index | 1 |
|---|---|
| Routing ID | Routing ID #5 |
| Re-writing Routing ID | Routing ID #3 |

Table 23 is an example of a first routing table of IAB-node 6 for the donor-CU2 domain.

**Table 23**

| Routing Configuration Index | 1 |
|---|---|
| Routing ID | Routing ID #3 |
| Next Hop Address | IAB-node 2 |
| Availability | Yes |

Table 24 is an example of a second routing table of IAB-node 6 for the donor-CU1 domain.

**Table 24**

| Routing Configuration Index | 1 |
|---|---|
| Routing ID | Routing ID #4 |
| Next Hop Address | IAB-node 5 |
| Availability | Yes |

In the example in FIG. 21, IAB-node 6 establishes dual connectivity radio links with IAB-node 2 and IAB-node 5. If IAB-node 6 (IAB-MT) detects that an RLF occurs in the radio link corresponding to IAB-node 2 and no RLF occurs in an ingress link corresponding to IAB-node 5, it determines that routing ID#3 with a next hop address that is IAB-node 2 is unavailable. IAB-node 6 (IAB-DU) may indicate a routing ID with a next hop address that is IAB-node 2 to IAB-node 4 (IAB-MT). According to the second routing table of IAB-node 6, a next hop address of routing ID#3 is IAB-node 2. As routing ID#3 belongs to replacement routing IDs in the inter-donor-CU uplink routing replacement table, when IAB-node 6 transmits an RLF indication to IAB-node 4, a replaced routing ID (routing ID#5) to which routing ID#3 corresponds shall be included. Thus, IAB-node 4 determines that routing ID#5 is unavailable, that is, an egress link to which IAB-node 6 corresponds is not available for routing ID#5.

When IAB-node 4 receives an RLF indication containing routing ID#5 from the ingress link to which IAB-node 6 corresponds, it determines that the RLF indication is received from the ingress link of the second donor-CU domain, and IAB-node 4 determines that the link to which IAB-node 6 corresponds is unavailable for routing ID#5 in the second routing table (but the link to which IAB-node 4 corresponds is available for routing ID#4). The second routing table in IAB-node 4 is updated to Table 25.

**Table 25**

| Routing Configuration Index | 1 | 2 |
|---|---|---|
| Routing ID | Routing ID #5 | Routing ID #4 |
| Next Hop Address | IAB-node 6 | IAB-node 6 |
| Availability | No | Yes |

When IAB-node 4 receives uplink data with a packet header carrying routing ID#6, it determines that routing ID#6 is the replaced routing ID in the inter-donor-CU uplink routing replacement table. Routing ID#6 in the packet header is modified to a corresponding replacement routing ID (routing ID#5) according to the inter-donor-CU uplink routing replacement table.

Thereafter, IAB-node 4 selects an egress link according to routing ID#5 and finds that a routing ID of a routing configuration matches routing ID#5 by looking up the second routing table, but an egress link to which a next hop address IAB-node 6 in the routing configuration corresponds is unavailable for routing ID#5, indicating that there exists no available egress link for routing ID#5.

Afterwards, IAB-node 4 checks further whether there is an egress link available for the destination address IAB-donor DU2 in the packet header. If it is found that a destination address of routing ID#4 is also IAB-donor DU2 and the egress link to which the next hop address (IAB-node 6) of routing ID#4 corresponds is available for routing ID#4, IAB-node 4 may select the egress link to which the next hop address (IAB-node 6) of routing ID#4 corresponds as egress link of data packet.

In addition, if the egress link to which IAB-node 6 correspond is also unavailable for routing ID#4, for example, when an RLF indication received by IAB-node 4 from IAB-node 6 contains routing ID#4, IAB-node 4 deems that the egress link to which IAB-node 6 corresponds is unavailable for routing ID#4, indicating that there is no available egress links in the donor-CU2 domain. IAB-node 4 further checks if there is an available routing in the donor-CU1 domain. If it is found according to the first routing table of IAB-node 4 that destination addresses of routing ID#1 and routing ID#2 are IAB-donor DU1 and egress links to which the next hop address (IAB-node 3) corresponds are available for routing ID#1 and routing ID#2, respectively, IAB-node 4 may select the egress link to which the next hop address (IAB-node 3) of routing ID#1 or routing ID#2 corresponds as the egress link of data packet. In order that the uplink data are not dropped by IAB-donor DU1, it is needed to modify the destination address in the packet header to IAB-donor DU1, or modify routing ID#5 in the packet header to routing ID#1 or routing ID#2.

It should be noted that FIGs. 17-21 only schematically illustrates the embodiment of this disclosure; however, this disclosure is not limited thereto. For example, an order of execution of the operations may be appropriately adjusted, and furthermore, some other operations may be added, or some operations therein may be reduced. And appropriate variants may be made by those skilled in the art according to the above contents, without being limited to what is contained in FIGs. 17-21.

The above embodiments only illustrate the embodiment of this disclosure. However, this disclosure is not limited thereto, and appropriate variants may be made on the basis of these embodiments. For example, the above embodiments may be executed separately, or one or more of them may be executed in a combined manner.

According to the method of the embodiment of this disclosure, selection of congested routing and BH RLC channels may be avoided, and the problem of congestion and drop of downlink data may be alleviated and solved.

### Embodiment of a third aspect

The embodiment of this disclosure provides a routing apparatus, which performs routing on downlink data.

FIG. 22 is a schematic diagram of the routing apparatus of the embodiment of this disclosure. The apparatus may be, for example, an IAB-node in an IAB system, or one or some components or assemblies configured in the IAB-node. The IAB-node serves as a parent node. An implementation principle of the routing apparatus in the embodiment of this disclosure is similar to that of the IAB-node in FIG. 12 in the embodiment of the first aspect, with identical contents being not going to be repeated herein any further.

As shown in FIG. 22, the routing apparatus 2200 of the embodiment of this disclosure includes:
a receiving unit 2201 configured to receive flow control indication information for a BH RLC channel and/or for a routing from a child node, the flow control indication information including an available buffer size for the BH RLC channel and an identifier of the BH RLC channel, and/or including an available buffer size for the routing and an identifier of the routing; and
a processing unit 2202 configured to perform routing on downlink data according to the available buffer size.

In some embodiments, that the processing unit 2202 performs routing on downlink data according to the available buffer size includes that the processing unit 2202 determines whether the BH RLC channel and/or the routing is/are congested and available according to the available buffer size, and performs routing on the downlink data according to whether the BH RLC channel and/or the routing is/are available.

In some embodiments, if the available buffer size of the above routing is lower than a first buffer threshold, the processing unit 2202 determines that the routing is congested and that an egress link to which the above child node corresponds is unavailable for the routing; or, if the available buffer size of the BH RLC channel is lower than a second buffer threshold, the processing unit 2202 determines that the BH RLC channel is congested and that the BH RLC channel of the link to which the child node corresponds is unavailable.

In the embodiment of this disclosure, that the processing unit 2202 performs routing on the downlink data according to whether the routing is available includes that the processing unit 2202 selects an egress link for the downlink data according to whether the routing is available.

In some embodiments, if the IAB-node is configured with the inter-donor-CU downlink routing replacement table and the downlink data come from an ingress link to which the second donor-CU corresponds, the processing unit 2202 replaces the first routing ID in the downlink data BAP header with a corresponding second routing ID according to the inter-donor-CU downlink routing replacement table; wherein the first routing ID belongs to a second donor-CU topology domain, and the second routing ID belongs to a first donor-CU topology domain. If the routing table of the IAB-node has routing configuration satisfying a second condition, the processing unit 2202 takes an egress link to which a next hop address in the routing configuration corresponds as a first egress link of the downlink data. The second condition refers to that a routing ID in the routing configuration matches the second routing ID, and the egress link to which the next hop address in the routing configuration corresponds is available for a routing in the routing configuration.

In the above embodiment, after the processing unit 2202 replaces the first routing ID in the downlink data BAP header with a corresponding second routing ID, if the destination BAP address of the second routing ID is a BAP address configured by the first donor-CU for the IAB-node, the processing unit 2202 submits the downlink data to a higher layer of the IAB-node.

In some embodiments, if the IAB-node is configured with an inter-donor-CU downlink routing replacement table and the downlink data are from an ingress link to which a second donor-CU corresponds, and if the destination BAP address of the first routing ID in the downlink data BAP header is a BAP address configured by the second donor-CU for the IAB-node, the processing unit 2202 submits the downlink data to the higher layer of the IAB-node.

In some embodiments, if the IAB-node is not configured with an inter-donor-CU downlink routing replacement table, or if the IAB-node is configured with an inter-donor-CU downlink routing replacement table and the downlink data come from the ingress link to which the first donor-CU corresponds, wherein, the first routing ID in the packet header of the downlink data belongs to the first donor-CU topology domain, then, if there is a routing configuration satisfying the first condition in the routing table of the IAB-node, the processing unit 2202 takes the egress link corresponding to the next hop address in the routing configuration as the first egress link of the downlink data to the higher layer of the IAB-node. The first condition refers to that a routing ID in the routing configuration matches the first routing ID, and the egress link to which the next hop address in the routing configuration corresponds is available for a routing in the routing configuration.

In the above embodiment, if there is no routing configuration satisfying the first condition in the routing table of the IAB-node, the processing unit 2202 determines whether there is a routing configuration satisfying a third condition in the routing table of the IAB-node, and if there is a routing configuration satisfying a third condition in the routing table of the IAB-node, the processing unit 2202 takes the egress link to which the next hop address in the routing configuration corresponds as the first egress link of the downlink data. The third condition refers to that a destination BAP address of the routing ID in the routing configuration matches a destination BAP address of the first routing ID, and the egress link to which the next hop address in the routing configuration corresponds is available for the routing in the routing configuration.

In some embodiments, if the IAB-node is not configured with an inter-donor-CU downlink routing replacement table, or if the IAB-node is configured with an inter-donor-CU downlink routing replacement table and the downlink data come from the ingress link to which the first donor-CU corresponds, then, if a destination BAP address of the first routing ID in the downlink data BAP header is a BAP address configured by the first donor-CU for the IAB-node, the processing unit 2202 submits the downlink data to the higher layer of the IAB-node.

In the embodiment of this disclosure, that the processing unit 2202 performs routing on the downlink data according to whether the routing is available further includes that the processing unit 2202 selects an egress BH RLC channel for the downlink data according to whether the BH RLC channel is available.

In some embodiments, the IAB-node is a donor-node in an IAB system, and that the processing unit 2202 selects an egress BH RLC channel for the downlink data according to whether the BH RLC channel is available includes that:
if there is a BH RLC channel configuration satisfying the fourth condition in the RLC channel mapping table of the IAB-node, the processing unit 2202 takes an egress BH RLC channel in the BH RLC channel configuration as the egress BH RLC channel of the above downlink data. The fourth condition refers to that the destination IP address and DSCP in the BH RLC channel configuration match the destination IP address and DSCP in the IP packet header of the above downlink data, the egress link to which the next hop address in the BH RLC channel configuration corresponds matches the first egress link of the above downlink data, and the egress BH RLC channel in the BH RLC channel configuration is available.

In the above embodiment, in one implementation, if there is no BH RLC channel configuration satisfying the fourth condition in the RLC channel mapping table of the IAB-node, the processing unit 2202 selects an available egress BH RLC channel on the first egress link as the egress BH RLC channel of the downlink data, and if there is no available BH RLC channel on the first egress link, the processing unit 2202 selects an available second egress link for the above downlink data.

In the above embodiment, in another implementation, if there is no BH RLC channel configuration satisfying the fourth condition in the RLC channel mapping table of the IAB-node, the processing unit 2202 selects an available second egress link for the downlink data, and if there is no available second egress link, the processing unit 2202 selects an available egress BH RLC channel on the first egress link as the egress BH RLC channel of the downlink data.

In some other embodiments, the IAB-node is an intermediate node in the IAB system, and that the processing unit 2202 selects an egress BH RLC channel for the downlink data according to whether the BH RLC channel is available includes that:
if there is a BH RLC channel configuration satisfying a fifth condition in the RLC channel mapping table of the IAB-node, the processing unit 2202 takes an egress BH RLC channel in the BH RLC channel configuration as the egress BH RLC channel of the downlink data. The fifth condition refers to that a last hop address and ingress RLC channel ID in the BH RLC channel configuration match the above downlink data, the egress link to which the next hop address in the BH RLC channel configuration corresponds matches the first egress link of the above downlink data, and the egress BH RLC channel in the BH RLC channel configuration is available.

In the above embodiment, in one implementation, if there is no BH RLC channel configuration satisfying the fifth condition in the RLC channel mapping table of the IAB-node, the processing unit 2202 selects an available BH RLC channel on the first egress link as the egress BH RLC channel of the downlink data, and if there is no available egress BH RLC channel on the first egress link, the processing unit 2202 selects an available second egress link for the downlink data.

In the above embodiment, in another implementation, if there is no BH RLC channel configuration satisfying the fifth condition in the RLC channel mapping table of the IAB-node, the processing unit 2202 selects an available second egress link for the downlink data, and if there is no available second egress link, the processing unit 2202 selects an available egress BH RLC channel on the first egress link as the egress BH RLC channel of the downlink data.

In the embodiment of this disclosure, as shown in FIG. 22, the apparatus 2200 may further include:
a transmitting unit 2203 configured to forward the flow control indication information to a parent node of the IAB-node.

In some embodiments, if it is determined that the IAB-node is configured with an inter-donor-CU downlink routing replacement table and a third routing ID contained in the flow control indication information belongs to replacement routing IDs in the inter-donor-CU downlink routing replacement table, the transmitting unit 2203 modifies the third routing ID in the flow control indication information into a corresponding fourth routing ID according to the inter-donor-CU downlink routing replacement table, and transmits the flow control indication information to an egress link to which the second donor-CU corresponds, wherein the third routing ID belongs to a first donor-CU topology domain, and the fourth routing ID belongs to a second donor-CU topology domain.

In some other embodiments, if it is determined that the IAB-node is not configured with an inter-donor-CU downlink routing replacement table, or if it is determined that a third routing ID contained in the flow control indication does not belong to the replacement routing IDs in the inter-donor-CU downlink routing replacement table, the transmitting unit 2203 transmits the flow control indication information containing the third routing ID to an egress link to which the first donor-CU corresponds, wherein the third routing ID belongs to the first donor-CU topology domain.

FIG. 23 is another schematic diagram of the routing apparatus of the embodiment of this disclosure. The apparatus may be, for example, an IAB-node in an IAB system, or one or some components or assemblies configured in the IAB-node. The IAB-node serves as a child node. An implementation principle of the routing apparatus in the embodiment of this disclosure is similar to that of the child node in FIG. 14A in the embodiment of the first aspect, with identical contents being not going to be repeated herein any further.

As shown in FIG. 23, the routing apparatus 2300 of the embodiment of this disclosure includes:
a transmitting unit 2301 configured to, when a BH RLC channel buffer of the child node exceeds a third buffer threshold, transmit flow control indication information based on BH RLC channel to the IAB-node (a parent node of the child node), wherein the flow control indication information includes an available buffer size for the BH RLC channel and an identifier of the BH RLC channel, so that the IAB-node performs routing on downlink data according to the available buffer size.

FIG. 24 is a further schematic diagram of the routing apparatus of the embodiment of this disclosure. The apparatus may be, for example, an IAB-node in an IAB system, or one or some components or assemblies configured in the IAB-node. The IAB-node serves as a child node. An implementation principle of the routing apparatus in the embodiment of this disclosure is similar to that of the child node in FIG. 14B in the embodiment of the first aspect, with identical contents being not going to be repeated herein any further.

As shown in FIG. 24, the routing apparatus 2400 of the embodiment of this disclosure includes:
a transmitting unit 2401 configured to, when a buffer of a fifth routing of the child node exceeds a fourth buffer threshold, transmit flow control indication information based on routing to the IAB-node (a parent node of the child node), wherein the flow control indication information includes an available buffer size for the fifth routing and a fifth routing ID, so that the IAB-node performs routing on downlink data according to the available buffer size.

In some embodiments, if the child node is configured with an inter-donor-CU downlink routing replacement table and the fifth routing ID belongs to the replacement routing IDs in the inter-donor-CU downlink routing replacement table, the transmitting unit 2401 contains a sixth routing ID to which the fifth routing ID in the inter-donor-CU downlink routing replacement table corresponds in the flow control indication information and transmits it to the egress link to which the second donor-CU corresponds, wherein the fifth routing ID belongs to the first donor-CU topology domain, and the sixth routing ID belongs to the second donor-CU topology domain.

In some embodiments, if the child node is not configured with an inter-donor-CU downlink routing replacement table, or the fifth routing ID contained in the flow control indication information does not belong to the replacement routing IDs in the inter-donor-CU downlink routing replacement table, the transmitting unit 2401 transmits the flow control indication information containing the fifth routing ID to the egress link to which the first donor-CU corresponds, wherein the fifth routing ID belongs to the first donor-CU topology domain.

It should be noted that the components or modules related to this disclosure are only described above. However, this disclosure is not limited thereto, and the routing apparatuses 2200/2300/2400 of the embodiment of this disclosure may further include other components or modules, and reference may be made to related techniques for particulars of these components or modules.

Furthermore, for the sake of simplicity, connection relationships between the components or modules or signal profiles thereof are only illustrated in FIGs. 22/23/24. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

According to the apparatus of the embodiment of this disclosure, selection of congested routing and BH RLC channels may be avoided, and the problem of congestion and drop of downlink data may be alleviated and solved.

### Embodiment of a fourth aspect

The embodiment of this disclosure provides a routing apparatus, which performs routing on uplink data.

FIG. 25 is a schematic diagram of the routing apparatus of the embodiment of this disclosure. The apparatus may be, for example, an IAB-node in an IAB system, or one or some components or assemblies configured in the IAB-node. The IAB-node serves as a parent node. An implementation principle of the routing apparatus in the embodiment of this disclosure is similar to that of the IAB-node in FIG. 17 in the embodiment of the second aspect, with identical contents being not going to be repeated herein any further.

As shown in FIG. 25, the routing apparatus 2500 of the embodiment of this disclosure includes:
a transmitting unit 2501 configured to, when it is detected that an RLF occurs in one or more ingress links, transmit RLF indication information to a child node, the RLF indication information including an identifier of a routing in a routing configuration of a routing table of the IAB-node with an egress link corresponding to a next hop address being the link in which the RLF occurs, so that the child node performs routing on uplink data according to the RLF indication information.

In some embodiments, if the IAB-node is configured with an inter-donor-CU uplink routing replacement table and the link in which an RLF occurs is the ingress link to which the second donor-CU corresponds, the transmitting unit 2501 determines according to a second routing table (a routing table for the second donor-CU topology domain) that the egress link to which the next hop address corresponds is a third routing ID of the ingress link to which the second donor-CU corresponds, determines a fourth routing ID that needs to be replaced with the third routing ID according to the inter-donor-CU uplink routing replacement table, and transmits the RLF indication information to the child node, the RLF indication information including the fourth routing ID, wherein the third routing ID belongs to a second donor-CU topology domain, and the fourth routing ID belongs to the first donor-CU topology domain.

In some embodiments, if the IAB-node is not configured with an inter-donor-CU uplink routing replacement table, or the link in which an RLF occurs is the ingress link to which the first donor-CU corresponds, the transmitting unit 2501 determines according to the first routing table (a routing table for the first donor-CU topology domain) that the egress link to which the next hop address corresponds is the third routing ID of the ingress link to which the first donor-CU corresponds, and transmits the RLF indication information to the child node, the RLF indication information including the third routing ID, wherein the IAB-node establishes F1 connection with the first donor-CU, and the third routing ID belongs to the first donor-CU topology domain.

FIG. 26 is another schematic diagram of the routing apparatus of the embodiment of this disclosure. The apparatus may be, for example, an IAB-node in an IAB system, or one or some components or assemblies configured in the IAB-node. The IAB-node serves as a child node. An implementation principle of the routing apparatus in the embodiment of this disclosure is similar to that of the IAB-node in FIG. 19 in the embodiment of the second aspect, with identical contents being not going to be repeated herein any further.

As shown in FIG. 26, the routing apparatus 2600 of the embodiment of this disclosure includes:
a receiving unit 2601 configured to receive RLF indication information from the IAB-node, the RLF indication information including an identifier of a routing with a link corresponding to a next hop address that is a link in which an RLF occurs; and
a processing unit 2602 configured to perform routing on uplink data according to the RLF indication information.

In some embodiments, that the processing unit 2602 performs routing on uplink data according to the RLF indication information includes that the processing unit 2602 determines whether the routing is available according to the RLF indication information, and performs routing on the uplink data according to whether the routing is available.

In the above embodiment, that the processing unit 2602 determines whether the routing is available according to the RLF indication information includes that the processing unit 2602 determines according to the RLF indication information that a link to which the IAB-node corresponds is unavailable for the routing.

For example, if the link to which the IAB-node corresponds is the ingress link to which the first donor-CU corresponds, the processing unit 2602 determines that the link to which the IAB-node corresponds is unavailable for the routing in the first routing table.

For another example, if the link to which the IAB-node corresponds is the ingress link to which the second donor-CU corresponds, the processing unit 2602 determines that the link to which the IAB-node corresponds is unavailable for the routing in the second routing table.

In some embodiments, when it is determined that the link to which the IAB-node corresponds is unavailable for the routing, the processing unit 2602 may further modify an availability of the routing in the routing table to be unavailable (NO).

In some embodiments, that the processing unit 2602 performs routing on the uplink data according to whether the routing is available includes selecting an egress link for the uplink data according to whether the routing is available.

In some embodiments, if the child node is configured with an inter-donor-CU uplink routing replacement table and a first routing ID in a packet header of the uplink data belongs to a replaced routing ID in the inter-donor-CU uplink routing replacement table, the processing unit 2602 replaces the first routing ID in the BAP header of the uplink data with a corresponding second routing ID according to the inter-donor-CU uplink routing replacement table. If there is a routing configuration satisfying a first condition in a second routing table of the child node, the processing unit 2602 takes an egress link to which a next hop address in the routing configuration corresponds as a first egress link of the downlink data. The first condition refers to that a routing ID in the routing configuration matches the second routing ID, and the egress link to which the next hop address in the routing configuration corresponds is available for a routing in the routing configuration; wherein the first routing ID belongs to a first donor-CU topology domain, and the second routing ID belongs to a second donor-CU topology domain.

In the above embodiment, if there is no routing configuration satisfying the first condition in the second routing table of the child node, the processing unit 2602 determines whether there is a routing configuration satisfying a third condition in the second routing table of the child node; and if there is a routing configuration satisfying the third condition in the second routing table of the child node, the processing unit 2602 takes the egress link to which the next hop address in the routing configuration corresponds as an egress link of data packet of the uplink data. The third condition refers to that a destination BAP address of the routing ID in the routing configuration matches a destination BAP address of the second routing ID, and the egress link to which the next hop address in the routing configuration corresponds is available for the routing in the routing configuration.

In the above embodiment, if there is no routing configuration satisfying the third condition in the second routing table of the child node, the processing unit 2602 determines whether the child node is configured with a second inter-donor-CU routing replacement table; and if the child node is configured with the second inter-donor-CU routing replacement table and the second routing ID belongs to a replaced routing ID in the second inter-donor-DU routing replacement table and is replaced with a fifth routing ID, the processing unit 2602 determines whether there is a routing configuration satisfying a fifth condition in the second routing table of the child node. If there is a routing configuration satisfying the fifth condition in the second routing table of the child node, the processing unit 2602 modifies a second routing ID in a header of a data packet of the uplink data into a corresponding fifth routing ID according to the second inter-donor-DU routing replacement table, and then takes the egress link to which the next hop address in the routing configuration corresponds as an egress link of the data packet of the uplink data. The fifth condition includes that the routing ID in the routing configuration matches the fifth routing ID or a destination address in the routing configuration matches a destination address of the fifth routing ID, and the egress link to which the next hop address in the routing configuration corresponds is available for the routing in the routing configuration.

In the above embodiment, if there is no routing configuration satisfying the fifth condition in the second routing table of the child node, the processing unit 2602 determines whether the child node is configured with a first routing table; if the child node is configured with a first routing table, the processing unit 2602 determines whether there is a routing configuration satisfying a seventh condition in the first routing table of the child node. If there is a routing configuration satisfying the seventh condition in the first routing table of the child node, the processing unit 2602 modifies a first routing ID in the header of the data packet of the uplink data into a seventh routing ID, and takes the egress link to which the next hop address in the routing configuration corresponds as an egress link of the data packet of the uplink data. The seventh condition includes that the routing ID in the routing configuration matches the seventh routing ID or a destination address in the routing configuration matches a destination address of the seventh routing ID, and the egress link to which the next hop address in the routing configuration corresponds is available for the routing in the routing configuration.

In some embodiments, if the child node is not configured with an inter-donor-CU uplink routing replacement table, or if the first routing ID in the packet header of the uplink data does not belong to the replaced routing IDs in the inter-donor-CU uplink routing replacement table, then, if there is a routing configuration satisfying a second condition in the first routing table of the child node, the processing unit 2602 takes the egress link to which the next hop address in the routing configuration corresponds as the first egress link of the downlink data. The second condition refers to that a routing ID in the routing configuration matches the first routing ID, and the egress link to which the next hop address in the routing configuration corresponds is available for a routing in the routing configuration, wherein the first routing ID belongs to the first donor-CU topology domain.

In the above embodiment, if there is no routing configuration satisfying the second condition in the first routing table of the child node, the processing unit 2602 determines whether there is a routing configuration satisfying a fourth condition in the first routing table of the child node; if there is a routing configuration satisfying the fourth condition in the first routing table of the child node, the processing unit 2602 takes an egress link to which a next hop address in the routing configuration corresponds as an egress link of the data packet of the uplink data. The fourth condition refers to that a destination BAP address of a routing ID in the routing configuration matches the destination BAP address of the first routing ID, and the egress link to which the next hop address in the routing configuration corresponds is available for a routing in the routing configuration.

In the above embodiment, if there is no routing configuration satisfying the fourth condition in the first routing table of the child node, the processing unit 2602 determines whether the child node is configured with a first inter-donor-DU routing replacement table; and if the child node is configured with the first inter-donor-DU routing replacement table and the first routing ID belongs to replaced routing IDs in the first inter-donor-DU routing replacement table and is replace by a sixth routing ID, the processing unit 2602 determines whether there is routing configuration satisfying a sixth condition in the first routing table of the child node. If there is routing configuration satisfying the sixth condition in the first routing table of the child node, the processing unit 2602 takes an egress link to which a next hop address in the routing configuration corresponds as the egress link of the data packet of the uplink data according to the first inter-donor-DU routing replacement table. The sixth condition includes that the routing ID in the routing configuration matches the sixth routing ID or the destination address in the routing configuration matches a destination address of the sixth routing ID, and the egress link to which the next hop address in the routing configuration corresponds is available for a routing in the routing configuration.

In the above embodiment, if there is no routing configuration satisfying the sixth condition in the first routing table of the child node, the processing unit 2602 determines whether the child node is configured with a second routing table. If the child node is configured with a second routing table, the processing unit 2602 determines whether there is routing configuration satisfying an eighth condition in the second routing table of the child node. If there is routing configuration satisfying the eighth condition in the second routing table of the child node, the processing unit 2602 modifies the first routing ID in the packet header of the uplink data to an eighth routing ID, and takes an egress link to which a next hop address in the routing configuration corresponds as the egress link of the data packet of the uplink data. The eighth condition includes that the routing ID in the routing configuration matches the eighth routing ID or the destination address in the routing configuration matches a destination address of the eighth routing ID, and the egress link to which the next hop address in the routing configuration corresponds is available for a routing in the routing configuration.

In the embodiment of this disclosure, as shown in FIG. 26, the apparatus 2600 further includes:
a transmitting unit 2603 configured to forward the RLF indication information to a child node of the child node.

In some embodiments, if the child node is configured with an inter-donor-CU uplink routing replacement table and the RLF indication information is received from an ingress link to which the second donor-CU corresponds, the RLF indication information including a third routing ID, the transmitting unit 2603 determines a fourth routing ID needing to be replaced with a third routing ID according to the inter-donor-CU uplink routing replacement table, and transmits the RLF indication information containing the fourth routing ID to a child node of its own; wherein the third routing ID belongs to a second donor-CU topology domain, and the fourth routing ID belongs to a first donor-CU topology domain.

In some embodiments, if the child node is not configured with an inter-donor-CU uplink routing replacement table, or if the RLF indication information is received from the ingress link to which the first donor-CU corresponds, wherein the RLF indication information includes a third routing ID, the transmitting unit 2603 transmits RLF indication information containing the third routing ID to a child node of the child node, wherein the third routing ID belongs to the first donor-CU topology domain.

It should be noted that the components or modules related to this disclosure are only described above. However, this disclosure is not limited thereto, and the routing apparatuses 2500/2600 of the embodiment of this disclosure may further include other components or modules, and reference may be made to related techniques for particulars of these components or modules.

Furthermore, for the sake of simplicity, connection relationships between the components or modules or signal profiles thereof are only illustrated in FIGs. 25/26. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

According to the apparatus of the embodiment of this disclosure, selection of congested routing and BH RLC channels may be avoided, and the problem of congestion and drop of downlink data may be alleviated and solved.

### Embodiment of a fifth aspect

The embodiment of this disclosure provides a communication system. FIG. 27 is a schematic diagram of the communication system 2700. As shown in FIG. 27, the communication system 2700 includes donor devices 2701 and 2702, IAB-nodes 2703 and 2704 and a terminal equipment 2705, wherein the donor devices 2701 and 2702 are also IAB-nodes, and furthermore, the IAB-node 2703 may establish dual connectivity with the two donor devices 2701 and 2702, the donor devices 2701 and 2702 may serve as parent node of the IAB-node 2703, and the IAB-node 2703 may also serve as a parent node of the IAB-node 2704. Correspondingly, the IAB-node 2703 may serve as a child node of the donor devices 2701 and 2702, the IAB-node 2704 may serve as a child node of the IAB-node 2703. An IAB-node serving as a parent node (such as the donor devices 2701 and 2702 and the IAB-node 2703) may execute the functions of the IAB-nodes in the embodiments of the first and second aspects, and an IAB-node serving as a child node (such as the IAB-nodes 2703 and 2704) may execute the functions of the child nodes in the embodiments of the first and second aspects.

For the sake of simplicity, description is given in FIG. 27 by taking two donor devices, two IAB-nodes and one terminal equipment as examples; however, the embodiment of this disclosure is not limited thereto. Reference may be made to relevant technologies for network architectures of the donor devices, the IAB-nodes and the terminal equipment, which shall not be repeated herein any further.

In some embodiments, serving as parent nodes, the donor devices 2701 and 2702 and the IAB-node 2703 are configured to carry out the method executed by the IAB-node in the embodiment of the first or the second aspect, i.e. the method shown in FIG. 12 or FIG. 17, and may include the apparatus shown in FIG. 22 or FIG. 25.

In some embodiments, serving as child nodes, the IAB-nodes 2703 and 2704 are configured to carry out the method executed by the child node in the embodiment of the first or the second aspect, i.e. the method shown in FIG. 14A or FIG. 14B or FIG. 19, and may include the apparatus shown in FIG. 23 or 24 or 26.

Reference may be made to the embodiments of the first to the fourth aspects for contents of the IAB-nodes serving as parent nodes and the IAB-nodes serving as child nodes, which shall not be repeated herein any further.

The embodiment of this disclosure further provides an IAB-node.

FIG. 28 is a schematic diagram of the IAB-node of the embodiment of this disclosure. As shown in FIG. 28, the IAB-node 2800 may include a processor (such as a central processing unit (CPU)) 2801 and a memory 2802, the memory 2802 being coupled to the processor 2801. The memory 2802 may store various data, and furthermore, it may store a program for information processing, and execute the program under control of the central processing unit 2801.

For example, the processor 2801 may be configured to execute a program to carry out the method executed by the IAB-node or the child node in the embodiment of the first aspect or the second aspect.

Furthermore, as shown in FIG. 28, the IAB-node 2800 may include a transceiver 2803, and an antenna 2804, etc.; wherein functions of the above components are similar to those in the related art, which shall not be described herein any further. It should be noted that the IAB-node 2800 does not necessarily include all the components shown in FIG. 28; and furthermore, the IAB-node 2800 may include components not shown in FIG. 28, and the related art may be referred to.

An embodiment of this disclosure provides a computer readable program, which, when executed in an IAB-node, will cause a computer to carry out the method carried out by the IAB-node or the child node in the embodiment of the first or second aspect in the IAB-node.

An embodiment of this disclosure provides a storage medium storing a computer readable program, which will cause a computer to carry out the method carried out by the IAB-node or the child node in the embodiment of the first or second aspect in an IAB-node.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

As to the above implementations disclosed in the embodiments, following supplements are further disclosed.
1. A routing method, applicable to an IAB-node in an IAB system, wherein the method includes:
   receiving flow control indication information for a BH RLC channel and/or for a routing by the IAB-node from a child node, the flow control indication information including an available buffer size for the BH RLC channel and an identifier of the BH RLC channel, and/or including an available buffer size for the routing and an identifier of the routing; and
   performing routing on downlink data by the IAB-node according to the available buffer size.
2. The method according to supplement 1, wherein the performing routing on downlink data by the IAB-node according to the available buffer size includes:
   determining whether the BH RLC channel and/or the routing is/are congested and available by the IAB-node according to the available buffer size; and
   performing routing on the downlink data by the IAB-node according to whether the BH RLC channel and/or the routing is/are available.
3. The method according to supplement 2, wherein,
   if the available buffer size of the routing is lower than a first buffer threshold, it is determined that the routing is congested and that a link to which the child node corresponds is unavailable for the routing; or, if the available buffer size of the BH RLC channel is lower than a second buffer threshold, it is determined that the BH RLC channel is congested and that the BH RLC channel of the link to which the child node corresponds is unavailable.
4. The method according to supplement 2, wherein the performing routing on the downlink data by the IAB-node according to whether the routing is available includes:
   selecting an egress link for the downlink data by the IAB-node according to whether the routing is available.
5. The method according to supplement 4, wherein the selecting an egress link for the downlink data according to whether the routing is available includes:
   if it is determined that the IAB-node is configured with an inter-donor-CU downlink routing replacement table and the downlink data are from an ingress link to which a second donor-CU corresponds, replacing a first routing ID in a BAP header of the downlink data with a corresponding second routing ID according to the inter-donor-CU downlink routing replacement table, wherein the first routing ID belongs to a second donor-CU topology domain, and the second routing ID belongs to a first donor-CU topology domain;
   if there is a routing configuration satisfying a second condition in a routing table of the IAB-node, taking an egress link to which a next hop address in the routing configuration corresponds as a first egress link of the downlink data;
   the second condition refers to that a routing ID in the routing configuration matches the second routing ID, and the egress link to which the next hop address in the routing configuration corresponds is available for a routing in the routing configuration.
6. The method according to supplement 5, wherein after replacing the first routing ID in the BAP header of the downlink data with the corresponding second routing ID, the method further includes:
   if a destination BAP address of the second routing ID is a BAP address configured by the first donor-CU for the IAB-node, submitting the downlink data to a higher layer of the IAB-node.
7. The method according to supplement 4, wherein the method further includes:
   if it is determined that the IAB-node is configured with an inter-donor-CU downlink routing replacement table and the downlink data are from an ingress link to which a second donor-CU corresponds,
   and if the destination BAP address of the first routing ID in the downlink data BAP header is a BAP address configured by the second donor-CU for the IAB-node, submitting the downlink data to a higher layer of the IAB-node.
8. The method according to supplement 4, wherein the selecting an egress link for the downlink data according to whether the routing is available includes:
   if it is determined that the IAB-node is not configured with an inter-donor-CU downlink routing replacement table, or if it is determined that the IAB-node is configured with an inter-donor-CU downlink routing replacement table and the downlink data are from the ingress link to which the first donor-CU corresponds, wherein the first routing ID in the packet header of the downlink data belongs to a first donor-CU topology domain,
   then, if there is a routing configuration satisfying a first condition in the routing table of the IAB-node, taking the egress link to which the next hop address in the routing configuration corresponds as the first egress link of the downlink data;
   the first condition refers to that a routing ID in the routing configuration matches the first routing ID, and the egress link to which the next hop address in the routing configuration corresponds is available for a routing in the routing configuration.
9. The method according to supplement 4, wherein the method further includes:
   if it is determined that the IAB-node is not configured with an inter-donor-CU downlink routing replacement table, or if it is determined that the IAB-node is configured with an inter-donor-CU downlink routing replacement table and the downlink data are from the ingress link to which the first donor-CU corresponds,
   then, if a destination BAP address of the first routing ID in the BAP header of the downlink data is a BAP address configured by the first donor-CU for the IAB-node, submitting the downlink data to a higher layer of the IAB-node.
10. The method according to supplement 8, wherein,
   if there is no routing configuration satisfying the first condition in the routing table of the IAB-node, determining whether the routing table of the IAB-node has routing configuration satisfying a third condition; and
   if there is a routing configuration satisfying a third condition in the routing table of the IAB-node, taking the egress link to which the next hop address in the routing configuration corresponds as the first egress link of the downlink data;
   the third condition refers to that a destination BAP address of the routing ID in the routing configuration matches a destination BAP address of the second routing ID, and the egress link to which the next hop address in the routing configuration corresponds is available for the routing in the routing configuration.
11. The method according to supplement 4, wherein the performing routing on the downlink data by the IAB-node according to whether the routing is available includes:
   selecting an egress BH RLC channel for the downlink data by the IAB-node according to whether the BH RLC channel is available.
12. The method according to supplement 11, wherein the IAB-node is a donor-node in an IAB system, and the selecting an egress BH RLC channel for the downlink data according to whether the BH RLC channel is available includes:
   if there is a BH RLC channel configuration satisfying a fourth condition in the RLC channel mapping table of the IAB-node, taking an egress BH RLC channel in the BH RLC channel configuration as the egress BH RLC channel of the downlink data;
   the fourth condition refers to that the destination IP address and DSCP in the BH RLC channel configuration match the destination IP address and DSCP in the IP packet header of the downlink data, the egress link to which the next hop address in the BH RLC channel configuration corresponds matches the first egress link of the downlink data, and the egress BH RLC channel in the BH RLC channel configuration is available.
13. The method according to supplement 12, wherein,
   if there is no BH RLC channel configuration satisfying the fourth condition in the RLC channel mapping table of the IAB-node, selecting an available egress BH RLC channel on the first egress link as the egress BH RLC channel of the downlink data; and
   if there is no available BH RLC channel on the first egress link, selecting an available second egress link for the downlink data.
14. The method according to supplement 12, wherein,
   if there is no BH RLC channel configuration satisfying the fourth condition in the RLC channel mapping table of the IAB-node, selecting an available second egress link for the downlink data; and
   if there is no available second egress link, selecting an available egress BH RLC channel on the first egress link as an egress BH RLC channel of the downlink data.
15. The method according to supplement 11, wherein the IAB-node is an intermediate node in the IAB system, and the selecting an egress BH RLC channel for the downlink data according to whether the BH RLC channel is available includes:
   if there is a BH RLC channel configuration satisfying the fifth condition in the RLC channel mapping table of the IAB-node, taking an egress BH RLC channel in the BH RLC channel configuration as the egress BH RLC channel of the downlink data;
   the fifth condition refers to that a last hop address and ingress RLC channel ID in the BH RLC channel configuration match the above downlink data, the egress link to which the next hop address in the BH RLC channel configuration corresponds matches the first egress link of the downlink data, and the egress BH RLC channel in the BH RLC channel configuration is available.
16. The method according to supplement 15, wherein,
   if there is no BH RLC channel configuration satisfying the fifth condition in the RLC channel mapping table of the IAB-node, selecting an available egress BH RLC channel on the first egress link as the egress BH RLC channel of the downlink data;
   and if there is no available BH RLC channel on the first egress link, an available second egress link is selected for the downlink data.
17. The method according to supplement 15, wherein,
   if there is no BH RLC channel configuration satisfying the fifth condition in the RLC channel mapping table of the IAB-node, an available second egress link is selected for the downlink data;
   and if there is no available second egress link, an available egress BH RLC channel on the first egress link is selected as the egress BH RLC channel of the downlink data.
18. The method according to supplement 1, wherein the method further includes:
   forwarding the flow control indication information by the IAB-node to the parent node of the IAB-node.
19. The method according to supplement 18, wherein,
   if it is determined that the IAB-node is configured with an inter-donor-CU downlink routing replacement table and a third routing ID contained in the flow control indication information belongs to replacement routing IDs in the inter-donor-CU downlink routing replacement table, the IAB-node modifies the third routing ID in the flow control indication information into a corresponding fourth routing ID according to the inter-donor-CU downlink routing replacement table, and transmits the flow control indication information to an egress link to which the second donor-CU corresponds;
   wherein the third routing ID belongs to a first donor-CU topology domain, and the fourth routing ID belongs to a second donor-CU topology domain.
20. The method according to supplement 18, wherein,
   if it is determined that the IAB-node is not configured with an inter-donor-CU downlink routing replacement table, or if it is determined that a third routing ID contained in the flow control indication does not belong to the replacement routing IDs in the inter-donor-CU downlink routing replacement table, the IAB-node transmits the flow control indication information containing the third routing ID to an egress link to which the first donor-CU corresponds;
   wherein the third routing ID belongs to a first donor-CU topology domain.
21. A routing method, applicable to a child node of an IAB-node in an IAB system, wherein the method includes:
   when a BH RLC channel buffer of the child node exceeds a third buffer threshold, transmitting flow control indication information based on BH RLC channel by the child node to the IAB-node, wherein the flow control indication information includes an available buffer size for the BH RLC channel and an identifier of the BH RLC channel, so that the IAB-node performs routing on downlink data according to the available buffer size.
22. A routing method, applicable to a child node of an IAB-node in an IAB system, wherein the method includes:
   when a buffer of a fifth routing exceeds a fourth buffer threshold, transmitting flow control indication information based on routing by the child node to the IAB-node, wherein the flow control indication information includes an available buffer size for the fifth routing and a fifth routing ID, so that the IAB-node performs routing on downlink data according to the available buffer size.
23. The method according to supplement 22, wherein,
   if it is determined that the child node is configured with an inter-donor-CU downlink routing replacement table and the fifth routing ID belongs to the replacement routing IDs in the inter-donor-CU downlink routing replacement table, the child node contains a sixth routing ID to which the fifth routing ID in the inter-donor-CU downlink routing replacement table corresponds in the flow control indication information and transmits it to the egress link to which the second donor-CU corresponds;
   wherein the fifth routing ID belongs to a first donor-CU topology domain, and the sixth routing ID belongs to a second donor-CU topology domain.
24. The method according to supplement 22, wherein,
   if it is determined that the child node is not configured with an inter-donor-CU downlink routing replacement table, or the fifth routing ID contained in the flow control indication information does not belong to the replacement routing IDs in the inter-donor-CU downlink routing replacement table, the child node transmits the flow control indication information containing the fifth routing ID to the egress link to which the first donor-CU corresponds;
   wherein the fifth routing ID belongs to the first donor-CU topology domain.
25. A routing method, applicable to an IAB-node in an IAB system, wherein the method includes:
   when it is detected that an RLF occurs in one or more ingress links, transmitting RLF indication information by the IAB-node to a child node, the RLF indication information including an identifier of a routing in a routing configuration of a routing table of the IAB-node with an egress link corresponding to a next hop address being the link in which the RLF occurs, so that the child node performs routing on uplink data according to the RLF indication information.
26. The method according to supplement 25, wherein the transmitting RLF indication information to a child node includes:
   if it is determined that the IAB-node is configured with an inter-donor-CU uplink routing replacement table and the link in which the RLF occurs is an ingress link to which the second donor-CU corresponds, determining by the IAB-node according to a second routing table that the egress link to which the next hop address corresponds is a third routing ID of an ingress link to which the second donor-CU corresponds, wherein the second routing table is a routing table for the second donor-CU topology domain;
   determining a fourth routing ID needing to be replaced with a third routing ID by the IAB-node according to the inter-donor-CU uplink routing replacement table; and
   transmitting the RLF indication information by the IAB-node to a child node, the RLF indication information including the fourth routing ID;
   wherein the third routing ID belongs to a second donor-CU topology domain, and the fourth routing ID belongs to a first donor-CU topology domain.
27. The method according to supplement 25, wherein the transmitting the RLF indication information to a child node includes:
   if it is determined that the IAB-node is not configured with an inter-donor-CU uplink routing replacement table, or the link in which an RLF occurs is the ingress link to which the first donor-CU corresponds, determining by the IAB-node according to the first routing table that the egress link to which the next hop address corresponds is the third routing ID of the ingress link to which the first donor-CU corresponds, wherein the first routing table is a routing table for the first donor-CU topology domain; and
   transmitting the RLF indication information by the IAB-node to the child node, the RLF indication information including the third routing ID,
   wherein the IAB-node establishes F1 connection with the first donor-CU, and the third routing ID belongs to the first donor-CU topology domain.
28. A routing method, applicable to a child node of an IAB-node in an IAB system, wherein the method includes:
   receiving RLF indication information by the child node from the IAB-node, the RLF indication information including an identifier of a routing with a link corresponding to a next hop address being the link in which the RLF occurs; and
   performing routing on uplink data by the child node according to the RLF indication information.
29. The method according to supplement 28, wherein the performing routing on uplink data by the child node according to the RLF indication information includes:
   determining by the child node whether the routing is available according to the RLF indication information; and
   performing routing on the uplink data by the child node according to whether the routing is available.
30. The method according to supplement 29, wherein the determining by the child node whether the routing is available according to the RLF indication information includes:
   determining by the child node according to the RLF indication information that a link to which the IAB-node corresponds is not available for the routing.
31. The method according to supplement 30, wherein,
   if the link to which the IAB-node corresponds is an ingress link to which a first donor-CU corresponds, the child node determines that the link to which the IAB-node corresponds is not available for the routing in a first routing table, the first routing table being a routing table for a first donor-CU topology domain.
32. The method according to supplement 30, wherein,
   if the link to which the IAB-node corresponds is an ingress link to which a second donor-CU corresponds, the child node determines that the link to which the IAB-node corresponds is not available for the routing in a second routing table, the second routing table being a routing table for a second donor-CU topology domain.
33. The method according to supplement 30, wherein the method further includes:
   modifying availability of the routing in the routing table to be unavailable (NO) by the child node.
34. The method according to supplement 30, wherein the performing routing on the uplink data by the child node according to whether the routing is available includes:
   selecting an egress link for the uplink data according to whether the routing is available.
35. The method according to supplement 34, wherein the selecting an egress link for the uplink data according to whether the routing is available includes:
   if it is determined that the child node is configured with an inter-donor-CU uplink routing replacement table and a first routing ID in a packet header of the uplink data belongs to a replaced routing ID in the inter-donor-CU uplink routing replacement table,
   replacing the first routing ID in the BAP header of the uplink data with a corresponding second routing ID by the child node according to the inter-donor-CU uplink routing replacement table;
   if there is a routing configuration satisfying a first condition in a second routing table of the child node, taking an egress link to which a next hop address in the routing configuration corresponds as a first egress link of the uplink data by the child node;
   the first condition refers to that a routing ID in the routing configuration matches the second routing ID, and the egress link to which the next hop address in the routing configuration corresponds is available for a routing in the routing configuration;
   wherein the first routing ID belongs to a first donor-CU topology domain, and the second routing ID belongs to a second donor-CU topology domain.
36. The method according to supplement 35, wherein if there is no routing configuration satisfying the first condition in the second routing table of the child node, whether there is a routing configuration satisfying a third condition in the second routing table of the child node is determined;
   if there is a routing configuration satisfying the third condition in the second routing table of the child node, the egress link to which the next hop address in the routing configuration corresponds is taken as an egress link of data packet of the uplink data;
   the third condition refers to that a destination BAP address of the routing ID in the routing configuration matches a destination BAP address of the second routing ID, and the egress link to which the next hop address in the routing configuration corresponds is available for the routing in the routing configuration.
37. The method according to supplement 36, wherein if there is no routing configuration satisfying the third condition in the second routing table of the child node, whether the child node is configured with a second inter-donor-CU routing replacement table is determined;
   if the child node is configured with the second inter-donor-CU routing replacement table and the second routing ID belongs to replaced routing IDs in the second inter-donor-DU routing replacement table and is replaced with a fifth routing ID, whether there is a routing configuration satisfying a fifth condition in the second routing table of the child node is determined;
   if there is a routing configuration satisfying the fifth condition in the second routing table of the child node, the child node modifies a second routing ID in a header of a data packet of the uplink data into a corresponding fifth routing ID according to the second inter-donor-DU routing replacement table, and then takes the egress link to which the next hop address in the routing configuration corresponds as an egress link of the data packet of the uplink data;
   the fifth condition includes that the routing ID in the routing configuration matches the fifth routing ID or a destination address in the routing configuration matches a destination address of the fifth routing ID, and the egress link to which the next hop address in the routing configuration corresponds is available for the routing in the routing configuration.
   37a. The method according to supplement 37, if there is no routing configuration satisfying the fifth condition in the second routing table of the child node, determining whether the child node is configured with a first routing table;
   if the child node is configured with the first routing table, determining whether there is a routing configuration satisfying a seventh condition in the first routing table of the child node;
   if there is a routing configuration satisfying the seventh condition, the child node modifies the first routing ID in the header of the data packet of the uplink data to a seventh routing ID, and takes the egress link corresponding to the next hop address in the routing configuration as the egress link of the data packet of the uplink data;
   the seventh condition includes that the routing ID in the routing configuration matches the seventh routing ID, or the destination address in the routing configuration matches the destination address of the seventh routing ID, and the egress link corresponding to the next hop address in the routing configuration is available for the routing in the routing configuration.
38. The method according to supplement 34, wherein the selecting an egress link for the uplink data according to whether the routing is available includes:
   if it is determined that the child node is not configured with an inter-donor-CU uplink routing replacement table, or if the first routing ID in the packet header of the uplink data does not belong to the replaced routing IDs in the inter-donor-CU uplink routing replacement table,
   then, if there is routing configuration satisfying the second condition in the first routing table of the child node, the egress link to which the next hop address in the routing configuration corresponds is taken as the first egress link of the downlink data;
   the second condition refers to that a routing ID in the routing configuration matches the second routing ID, and the egress link to which the next hop address in the routing configuration corresponds is available for a routing in the routing configuration;
   wherein the first routing ID belongs to the first donor-CU topology domain.
39. The method according to supplement 38, wherein if there is no routing configuration satisfying the second condition in the first routing table of the child node, whether there is routing configuration satisfying a fourth condition in the first routing table of the child node is determined;
   and if there is routing configuration satisfying the fourth condition in the first routing table of the child node, an egress link to which a next hop address in the routing configuration corresponds is taken as an egress link of the data packet of the uplink data;
   the fourth condition refers to that a destination BAP address of a routing ID in the routing configuration matches the destination BAP address of the first routing ID, and the egress link to which the next hop address in the routing configuration corresponds is available for a routing in the routing configuration.
40. The method according to supplement 39, wherein if there is no routing configuration satisfying the fourth condition in the first routing table of the child node, whether the child node is configured with a first inter-donor-DU routing replacement table is determined;
   if the child node is configured with the first inter-donor-DU routing replacement table and the first routing ID belongs to replaced routing IDs in the first inter-donor-DU routing replacement table and is replace by a sixth routing ID, whether there is routing configuration satisfying a sixth condition in the first routing table of the child node is determined;
   if there is routing configuration satisfying the sixth condition in the first routing table of the child node, the child node takes an egress link to which a next hop address in the routing configuration corresponds as the egress link of the data packet of the uplink data;
   the sixth condition includes that the routing ID in the routing configuration matches the sixth routing ID or the destination address in the routing configuration matches a destination address of the sixth routing ID, and the egress link to which the next hop address in the routing configuration corresponds is available for a routing in the routing configuration.
      40a. The method according to supplement 40, wherein if there is no routing configuration satisfying the sixth condition in the first routing table of the child node, whether the child node is configured with a second routing table is determined;
      if the child node is configured with a second routing table, whether there is routing configuration satisfying an eighth condition in the second routing table of the child node is determined;
      if there is routing configuration satisfying the eighth condition in the second routing table of the child node, the child node modifies the first routing ID in the packet header of the uplink data to an eighth routing ID, and takes an egress link to which a next hop address in the routing configuration corresponds as the egress link of the data packet of the uplink data;
      the eighth condition includes that the routing ID in the routing configuration matches the eighth routing ID or the destination address in the routing configuration matches a destination address of the eighth routing ID, and the egress link to which the next hop address in the routing configuration corresponds is available for a routing in the routing configuration.
41. The method according to any one of supplements 28-40, wherein the method further includes:
   forwarding the RLF indication information by the child node to a child node of the child node.
42. The method according to supplement 41, wherein,
   if it is determined that the child node is configured with an inter-donor-CU uplink routing replacement table and the RLF indication information is received from an ingress link to which the second donor-CU corresponds, the RLF indication information including a third routing ID,
   the child node determines a fourth routing ID needing to be replaced with a third routing ID according to the inter-donor-CU uplink routing replacement table,
   and the child node transmits the RLF indication information to the child node of the child node, the RLF indication information including the fourth routing ID;
   wherein the third routing ID belongs to a second donor-CU topology domain, and the fourth routing ID belongs to a first donor-CU topology domain.
43. The method according to supplement 41, wherein,
   if it is determined that the child node is not configured with an inter-donor-CU uplink routing replacement table, or if the RLF indication information is received from the ingress link to which the first donor-CU corresponds, wherein the RLF indication information includes a third routing ID,
   the child node transmits RLF indication information to a child node of its own, the RLF indication information including the third routing ID;
   wherein the third routing ID belongs to the first donor-CU topology domain.
44. An IAB-node, including a memory and a processor, the memory storing a computer program, wherein the processor is configured to execute the computer program to carry out the method as described in any one of supplements 1-43.
45. A communication system, including a donor device, an IAB-node and a terminal equipment, wherein a parent node in the IAB-node is configured to execute the method as described in any one of supplements 1-27, and/or a child node in the IAB-node is configured to execute the method as described in any one of supplements 28-43.

## Claims

1. A routing apparatus, configured in an IAB-node in an IAB system, wherein the apparatus comprises:
a receiving unit configured to receive flow control indication information for a BH RLC channel and/or for a routing from a child node, the flow control indication information including an available buffer size for the BH RLC channel and an identifier of the BH RLC channel, and/or including an available buffer size for the routing and an identifier of the routing; and
a processing unit configured to perform routing on downlink data according to the available buffer size.

2. The apparatus according to claim 1, wherein that the processing unit performs routing on downlink data according to the available buffer size comprises that:
the processing unit determines whether the BH RLC channel and/or the routing is/are congested and available according to the available buffer size;
the processing unit performs routing on the downlink data according to whether the BH RLC channel and/or the routing is/are available.

3. The apparatus according to claim 2, wherein that the processing unit performs routing on the downlink data according to whether the routing is available comprises that:
the processing unit selects an egress link for the downlink data according to whether the routing is available.

4. The apparatus according to claim 3, wherein that the processing unit selects an egress link for the downlink data according to whether the routing is available comprises that:
if it is determined that the IAB-node is configured with an inter-donor-CU downlink routing replacement table and the downlink data are from an ingress link to which a second donor-CU corresponds, the processing unit replaces a first routing ID in a BAP header of the downlink data with a corresponding second routing ID according to the inter-donor-CU downlink routing replacement table, wherein the first routing ID belongs to a second donor-CU topology domain, and the second routing ID belongs to a first donor-CU topology domain;
if there is a routing configuration satisfying a second condition in a routing table of the IAB-node, the processing unit takes an egress link to which a next hop address in the routing configuration corresponds as a first egress link of the downlink data;
the second condition refers to that a routing ID in the routing configuration matches the second routing ID, and the egress link to which the next hop address in the routing configuration corresponds is available for a routing in the routing configuration.

5. The apparatus according to claim 3, wherein,
if it is determined that the IAB-node is not configured with the inter-donor-CU downlink routing replacement table, or it is determined that the IAB-node is configured with the inter-donor-CU downlink routing replacement table and the downlink data are from an ingress link to which a first donor-CU corresponds,
then, if a destination BAP address of the first routing ID in the BAP header of the downlink data is a BAP address configured by the first donor-CU for the IAB-node, the processing unit submits the downlink data to a higher layer of the IAB-node.

6. The apparatus according to claim 1, wherein the apparatus further comprises:
a transmitting unit configured to forward the flow control indication information to a parent node of the IAB-node.

7. The apparatus according to claim 6, wherein,
if it is determined that the IAB-node is configured with an inter-donor-CU downlink routing replacement table and a third routing ID contained in the flow control indication information belongs to replacement routing IDs in the inter-donor-CU downlink routing replacement table, the transmitting unit modifies the third routing ID in the flow control indication information to a corresponding fourth routing ID according to the inter-donor-CU downlink routing replacement table, and transmits the flow control indication information to an egress link to which the second donor-CU corresponds;
wherein the third routing ID belongs to a first donor-CU topology domain, and the fourth routing ID belongs to a second donor-CU topology domain.

8. A routing apparatus, configured in an IAB-node in an IAB system, wherein the apparatus comprises:
a transmitting unit configured to, when it is detected that an RLF occurs in one or more ingress links, transmit RLF indication information to a child node, the RLF indication information including an identifier of a routing in a routing configuration of a routing table of the IAB-node with an egress link corresponding to a next hop address being the link in which the RLF occurs, so that the child node performs routing on uplink data according to the RLF indication information.

9. The apparatus according to claim 8, wherein that the transmitting unit transmits RLF indication information to a child node comprises that:
if it is determined that the IAB-node is configured with an inter-donor-CU uplink routing replacement table and the link in which the RLF occurs is an ingress link to which the second donor-CU corresponds, the transmitting unit determines according to a second routing table that the egress link to which the next hop address corresponds is a third routing ID of an ingress link to which the second donor-CU corresponds, wherein the second routing table is a routing table for the second donor-CU topology domain;
the transmitting unit determines a fourth routing ID needing to be replaced with a third routing ID according to the inter-donor-CU uplink routing replacement table; and
the transmitting unit transmits the RLF indication information to a child node, the RLF indication information including the fourth routing ID;
wherein the third routing ID belongs to a second donor-CU topology domain, and the fourth routing ID belongs to a first donor-CU topology domain.

10. A routing apparatus, configured in a child node of an IAB-node in an IAB system, wherein the apparatus comprises:
a receiving unit configured to receive RLF indication information from an IAB-node, the RLF indication information including an identifier of a routing with a link corresponding to a next hop address being the link in which the RLF occurs; and
a processing unit configured to perform routing on uplink data according to the RLF indication information.

11. The apparatus according to claim 10, wherein that the processing unit performs routing on uplink data according to the RLF indication information comprises:
the processing unit determines whether the routing is available according to the RLF indication information; and
the processing unit performs routing on the uplink data according to whether the routing is available.

12. The apparatus according to claim 11, wherein that the processing unit determines whether the routing is available according to the RLF indication information comprises:
the processing unit determines according to the RLF indication information that a link to which the IAB-node corresponds is not available for the routing.

13. The apparatus according to claim 12, wherein,
if the link to which the IAB-node corresponds is an ingress link to which a first donor-CU corresponds, the child node determines that the link to which the IAB-node corresponds is not available for the routing in a first routing table, the first routing table being a routing table for a first donor-CU topology domain.

14. The apparatus according to claim 12, wherein,
if the link to which the IAB-node corresponds is an ingress link to which a second donor-CU corresponds, the processing unit determines that the link to which the IAB-node corresponds is not available for the routing in a second routing table, the second routing table being a routing table for a second donor-CU topology domain.

15. The apparatus according to claim 12, wherein that the processing unit performs routing on the uplink data according to whether the routing is available comprises:
the processing unit selects an egress link for the uplink data according to whether the routing is available.

16. The apparatus according to claim 15, wherein that the processing unit selects an egress link for the uplink data according to whether the routing is available comprises:
if it is determined that the child node is configured with an inter-donor-CU uplink routing replacement table and a first routing ID in a packet header of the uplink data belongs to replaced routing IDs in the inter-donor-CU uplink routing replacement table, the processing unit replaces the first routing ID in the BAP header of the uplink data with a corresponding second routing ID according to the inter-donor-CU uplink routing replacement table;
if there is a routing configuration satisfying a first condition in a second routing table of the child node, the processing unit takes an egress link to which a next hop address in the routing configuration corresponds as a first egress link of the uplink data;
the first condition refers to that a routing ID in the routing configuration matches the second routing ID, and the egress link to which the next hop address in the routing configuration corresponds is available for a routing in the routing configuration;
wherein the first routing ID belongs to a first donor-CU topology domain, and the second routing ID belongs to a second donor-CU topology domain.

17. The apparatus according to claim 16, wherein if there is no routing configuration satisfying the first condition in the second routing table of the child node, the processing unit determines whether there is a routing configuration satisfying a third condition in the second routing table of the child node;
if there is a routing configuration satisfying the third condition in the second routing table of the child node, the processing unit takes the egress link to which the next hop address in the routing configuration corresponds as an egress link of the data packet of the uplink data;
the third condition refers to that a destination BAP address of the routing ID in the routing configuration matches a destination BAP address of the second routing ID, and the egress link to which the next hop address in the routing configuration corresponds is available for the routing in the routing configuration.

18. The apparatus according to claim 17, wherein if there is no routing configuration satisfying the third condition in the second routing table of the child node, the processing unit determines whether the child node is configured with a second inter-donor-CU routing replacement table;
if the child node is configured with the second inter-donor-CU routing replacement table and the second routing ID belongs to replaced routing IDs in the second inter-donor-DU routing replacement table and is replaced with a fifth routing ID, the processing unit determines whether there is a routing configuration satisfying a fifth condition in the second routing table of the child node;
if there is a routing configuration satisfying the fifth condition in the second routing table of the child node, the processing unit modifies a second routing ID in a header of a data packet of the uplink data to a corresponding fifth routing ID according to the second inter-donor-DU routing replacement table, and then takes the egress link to which the next hop address in the routing configuration corresponds as an egress link of the data packet of the uplink data;
the fifth condition includes that the routing ID in the routing configuration matches the fifth routing ID or a destination address in the routing configuration matches a destination address of the fifth routing ID, and the egress link to which the next hop address in the routing configuration corresponds is available for the routing in the routing configuration.

19. The apparatus according to claim 10, wherein the apparatus further comprises:
a transmitting unit configured to forward the RLF indication information to a child node of the child node.

20. The apparatus according to claim 19, wherein,
if it is determined that the child node is configured with an inter-donor-CU uplink routing replacement table and the RLF indication information is received from an ingress link to which the second donor-CU corresponds, the RLF indication information including a third routing ID,
the transmitting unit determines a fourth routing ID needing to be replaced with a third routing ID according to the inter-donor-CU uplink routing replacement table,
and the transmitting unit transmits the RLF indication information to the child node of the child node, the RLF indication information including the fourth routing ID;
wherein the third routing ID belongs to a second donor-CU topology domain, and the fourth routing ID belongs to a first donor-CU topology domain.
